(19) **Europäisches Patentamt / European Patent Office / Office européen des brevets**

(11) **EP 4 383 551 A1**

(12) **DEMANDE DE BREVET EUROPEEN**

(43) Date de publication:
**12.06.2024 Bulletin 2024/24**

(21) Numéro de dépôt: **23214212.5**

(22) Date de dépôt: **05.12.2023**

(51) Classification Internationale des Brevets (IPC):
**H02M 7/5387** (2007.01)    **H02M 1/00** (2006.01)
**G05F 1/67** (2006.01)    **H02S 40/32** (2014.01)

(52) Classification Coopérative des Brevets (CPC):
**H02M 7/5387; G05F 1/67; H02J 3/381;**
**H02M 1/0012; H02M 1/0077; H02M 7/49;**
**H02S 40/32;** H02J 2300/26

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **07.12.2022 FR 2212918**

(71) Demandeur: **Commissariat à l'énergie atomique et aux énergies alternatives**
**75015 Paris (FR)**

(72) Inventeurs:
• **DESPESSE, Ghislain**
  **38054 GRENOBLE CEDEX 9 (FR)**
• **BERTIN RIVIERE DE LA SOUCHERE, Thibault**
  **38054 GRENOBLE CEDEX 9 (FR)**

(74) Mandataire: **Lavoix**
**2, place d'Estienne d'Orves**
**75441 Paris Cedex 09 (FR)**

(54) **DISPOSITIF ÉLECTRONIQUE ET PROCÉDÉ DE PILOTAGE D'UN CONVERTISSEUR D ÉNERGIE ÉLECTRIQUE, SYSTÈME ÉLECTRONIQUE DE CONVERSION ET PROGRAMME D'ORDINATEUR ASSOCIÉS**

(57) Ce dispositif électronique de pilotage pilote un convertisseur d'énergie délivrant une tension totale de sortie et/ou un courant de sortie à partir d'une pluralité de tensions continues élémentaires d'entrée, chacune étant issue d'une source d'énergie respective.

Le convertisseur comprend plusieurs modules de conversion, chacun recevant une tension continue élémentaire d'entrée d'une source respective et délivrant une tension élémentaire de sortie ; les modules de conversion étant connectés en série par leurs sorties et la tension totale de sortie étant égale à la somme des tensions élémentaires de sortie ; chaque module de conversion comportant plusieurs interrupteurs pour convertir la tension continue élémentaire d'entrée en la tension élémentaire de sortie respectives.

Le dispositif de pilotage comprend plusieurs contrôleurs élémentaires et un contrôleur principal connecté aux contrôleurs élémentaires, chaque contrôleur élémentaire étant associé à un module de conversion respectif et commandant les interrupteurs dudit module.

Le contrôleur principal effectue une régulation d'une grandeur de sortie du convertisseur en envoyant des ordres de commande aux contrôleurs élémentaires, la régulation étant effectuée en fonction d'ensembles de grandeur(s) élémentaire(s) associés chacun à un module de conversion respectif.

Chaque contrôleur élémentaire mesure régulièrement des valeurs dudit ensemble de grandeur(s) pour le module de conversion associé, puis les transmet au contrôleur principal, ledit ensemble de grandeur(s) comportant la tension continue élémentaire d'entrée.

Le contrôleur principal comporte un premier estimateur calculant, pour chaque module de conversion, une valeur estimée de la tension continue élémentaire d'entrée à partir d'une valeur précédemment mesurée de la tension continue élémentaire d'entrée.

**(Cont. page suivante)**

$$\underline{\text{FIG.2}}$$

**Description**

La présente invention concerne un dispositif électronique de pilotage d'un convertisseur d'énergie électrique.

Le convertisseur d'énergie est apte à délivrer une tension totale de sortie ou un courant à une tension de sortie à partir d'une pluralité de tensions continues d'entrée, chacune étant issue d'une source d'énergie respective. Le convertisseur d'énergie comprend plusieurs modules de conversion d'énergie, chacun étant apte à recevoir en entrée une tension continue élémentaire d'entrée de la part d'une source d'énergie respective et à délivrer en sortie une tension élémentaire de sortie. Les modules de conversion sont connectés en série par leurs sorties et la tension totale de sortie étant égale à la somme des tensions élémentaires de sortie, et chaque module de conversion comporte plusieurs interrupteurs pour convertir la tension continue élémentaire d'entrée respective en la tension élémentaire de sortie respective.

Le dispositif électronique de pilotage comprend plusieurs contrôleurs élémentaires, également appelés contrôleurs locaux (de l'anglais *Local Controller*), et un contrôleur principal, également appelé contrôleur central (de l'anglais *Central Controller*) ou encore contrôleur maître (de l'anglais *Masser Controller*), connecté à chacun des contrôleurs élémentaires, chaque contrôleur élémentaire étant associé à un module de conversion respectif et configuré pour commander les interrupteurs dudit module de conversion.

Le contrôleur principal est configuré pour effectuer une régulation d'une grandeur de sortie du convertisseur d'énergie en envoyant des ordres de commande aux contrôleurs élémentaires, la régulation étant effectuée en fonction d'ensembles de grandeur(s) élémentaire(s), chaque ensemble de grandeur(s) élémentaire(s) étant associé à un module de conversion respectif.

Chaque contrôleur élémentaire est configuré pour mesurer régulièrement des valeurs de l'ensemble de grandeur(s) élémentaire(s) pour le module de conversion respectif auquel il est associé, puis pour les transmettre au contrôleur principal, l'ensemble de grandeur(s) élémentaire(s) comportant la tension continue élémentaire d'entrée.

L'invention concerne également un système électronique de conversion d'énergie électrique apte à convertir une pluralité de tensions continues d'entrée en une tension totale de sortie, le système de conversion comprenant un tel convertisseur d'énergie et un tel dispositif électronique de pilotage du convertisseur d'énergie électrique.

L'invention concerne aussi un procédé de pilotage d'un tel convertisseur d'énergie électrique ; ainsi qu'un programme d'ordinateur comportant des instructions logicielles qui, lorsqu'elles sont exécutées par un ordinateur, mettent en oeuvre un tel procédé de pilotage.

Un tel convertisseur d'énergie électrique est généralement appelé convertisseur multi-niveaux, et de nombreux articles présentent des solutions de pilotage de tels convertisseurs multi-niveaux.

Parmi ceux-ci, l'article « A Decentralized Control Method for Series Connected PV Battery Hybrid Microgrid » de Y. Pan et al (2017) concerne la gestion d'énergie d'un onduleur multi-niveaux et multi-sources d'énergie, connecté au réseau. Deux types de sources sont utilisés : des panneaux solaires et des batteries. L'objectif de l'article est de présenter une méthode de gestion de la production d'énergie des panneaux et de gestion de la charge/décharge des batteries. Chaque niveau est constitué d'une source d'énergie (panneau solaire ou batterie), ainsi que d'un module de conversion continu-alternatif, couramment noté DC/AC (de l'anglais *Direct Current / Alternating Current*). Le module de conversion DC/AC comporte un condensateur de découplage au niveau de la source, un pont en H permettant la production d'une tension alternative à partir d'une source continue ; et un filtre de sortie. Le pont en H est piloté par un contrôleur élémentaire, appelé contrôleur local. Chaque contrôleur local reçoit, de la part d'un unique contrôleur principal, appelé contrôleur central, des consignes de production de puissance active et réactive. De leurs côtés, les contrôleurs élémentaires envoient des données relatives à la source d'énergie (état de charge des batteries, tensions des panneaux solaires). Ces données sont envoyées à travers un bus de communication à faible débit. Ainsi, le contrôleur principal asservit chaque panneau solaire autour de son point de puissance maximale, régule l'état de charge des batteries et produit un courant sinusoïdal régulé sur le réseau électrique.

Cependant, un tel dispositif de pilotage est coûteux et complexe. En effet, chaque contrôleur élémentaire nécessite quatre mesures issues de quatre capteurs dont trois mesurant des données différentielles alternatives (deux courants et une tension). Par ailleurs, les commutations des modules de conversion d'énergie ne sont pas cordonnées entre elles (le contrôleur local recevant juste une consigne et non un ordre de commutation, il exécute de nombreuses commutations pour suivre sa consigne indépendamment des autres modules), ne permettant pas la réduction d'un filtre mutualisé sur la sortie globale, mais nécessitant un filtre de sortie efficace au niveau de chaque module (plus coûteux et volumineux et un nombre de commutations cumulées sur l'ensemble des modules élevés augmentant les pertes globales).

Le convertisseur d'énergie et le dispositif de pilotage présentés dans l'article « Hybrid Microgrid With Parallel- and Series-Connected Microconverters » de J. He et al (2018) poursuivent les travaux de Y. Pan et al (décrits dans l'article précité) au sein du même laboratoire (Tianjin University, Tianjin, China). Cet article se concentre sur la parallélisation d'onduleurs multi-niveaux afin d'améliorer la redondance au niveau de la production d'énergie.

Toutefois, de nouveau, les contrôleurs élémentaires sont des circuits complexes (microcontrôleur haute performance, ainsi que de nombreux capteurs coûteux) qui limitent leur utilisation notamment si le nombre de modules de conversion est élevé, typiquement supérieur à 5. De même, les commutations ne sont pas coordonnées : plus de commutations conduisant à plus de pertes et à un cumul de filtres de sortie volumineux et coûteux par rapport à des commutations cordonnées au niveau global.

L'article « A Grid-Supporting Strategy for Cascaded H-Bridge PV Converter Using VSG Algorithm With Modular Active Power Reserve » de X. Zhang et al. (2021) concerne également le pilotage d'un onduleur multi-niveaux, ici solaire et sans batteries. L'article met en avant la pertinence de ce convertisseur pour jouer un rôle de support pour le réseau électrique grâce à un fonctionnement VSG (de l'anglais *Virtual Synchronous Generator*).

Cependant, le convertisseur décrit dans cet article comporte seulement cinq modules de conversion, et possède une fréquence de fonctionnement faible de 2,5 kHz.

Le but de l'invention est alors de proposer un dispositif de pilotage d'un tel convertisseur d'énergie multi-niveaux permettant un pilotage à haute fréquence, typiquement supérieure à 20kHz, dudit convertisseur pouvant en outre être connecté à un grand nombre de sources d'énergie, par exemple à plus de dix sources d'énergie, tout en réduisant la complexité du dispositif de pilotage, ainsi que la taille et le volume des éléments de filtrage en sortie.

A cet effet, l'invention a pour objet un dispositif électronique de pilotage du type précité, dans lequel le contrôleur principal comporte un premier estimateur configuré pour calculer, pour chaque module de conversion, une valeur estimée de la tension continue élémentaire d'entrée à partir d'une valeur précédemment mesurée de la tension continue élémentaire d'entrée.

Avec le dispositif électronique de pilotage selon l'invention, le premier estimateur permet alors de pouvoir faire fonctionner le convertisseur d'énergie à une fréquence de commutation $f_{sw}$ supérieure à la fréquence de rafraîchissement $f_D$ d'une liaison de données, tel qu'un bus de données, reliant le contrôleur principal aux contrôleurs élémentaires, sans pour autant réduire la stabilité et la précision sur la régulation de chaque tension continue élémentaire d'entrée. A noter que plus la fréquence de commutation $f_{sw}$ est élevée, plus le filtre de sortie est compact. Dans le cadre de l'invention, la commutation des modules est coordonnée au niveau du contrôleur principal qui ne fait commuter à la fréquence de commutation $f_{sw}$ qu'un nombre minimal de modules. Au contraire, l'état de la technique décrit précédemment fait commuter tous les modules à des fréquences élevées conduisant à des pertes sans pour autant limiter l'ondulation du courant de sortie puisque les commutations de chaque sortie élémentaire sont gérées de manière non coordonnée. Si, pour une ondulation de courant ou de tension donnée, le filtre de sortie élémentaire est de même d'autant plus petit que la fréquence est élevée, à même ondulation de courant ou tension et à même fréquence de commutation, il est dans tous les cas plus volumineux que dans le cadre de l'invention où les commutations sont coordonnées.

Un point critique à résoudre de l'invention est de pouvoir, au niveau du contrôleur principal, déterminer chaque commutation de chaque module (et non de calculer juste une consigne) tout en ayant accès à des données mesurées sur les modules à une fréquence de rafraîchissement $f_D$ plus basse que la fréquence de commutation $f_{sw}$. Et ainsi procéder à des commutations coordonnées sans nécessiter de moyens de mesure et de communication très haut débits.

Avantageusement, en complément facultatif, le deuxième estimateur permet également ce fonctionnement du convertisseur d'énergie à la fréquence de commutation $f_{sw}$ supérieure à la fréquence de rafraîchissement $f_D$, en conservant la stabilité et la précision sur la régulation de chaque courant élémentaire d'entrée, puis du courant total de sortie en résultant.

En outre, le premier estimateur, et avantageusement le deuxième estimateur, permettent de limiter le nombre de capteurs nécessaires au niveau des modules de conversion ou des contrôleurs élémentaires, puisque le dispositif de pilotage nécessite seulement des capteurs de tension aptes à mesurer les tensions continues élémentaires d'entrée, soit typiquement un capteur de tension par module de conversion.

Suivant d'autres aspects avantageux de l'invention, le dispositif électronique de pilotage comprend une ou plusieurs des caractéristiques suivantes, prises isolément ou suivant toutes les combinaisons techniquement possibles :

- chaque module de conversion comprend deux bornes d'entrée, deux bornes de sortie, un pont de commutation avec plusieurs branches de commutation, chacune connectée entre les deux bornes d'entrée et comportant plusieurs interrupteurs connectés en série et reliés entre eux un point milieu connecté à une borne de sortie correspondante, chaque module de conversion comprenant en outre un condensateur connecté entre les bornes d'entrée, en parallèle du pont de commutation ;
- le premier estimateur est configuré pour calculer, pour chaque module de conversion, la valeur estimée de la tension continue élémentaire d'entrée en fonction de la valeur précédemment mesurée de la tension continue élémentaire d'entrée, de la capacité du condensateur et d'une valeur du courant circulant à travers ledit condensateur ;
la valeur du courant circulant à travers ledit condensateur étant de préférence obtenue par différence entre une valeur d'un courant élémentaire d'entrée reçu par le module de conversion et une valeur d'un courant de pont reçu par le pont de commutation ;
- le premier estimateur est configuré pour calculer, pour chaque module de conversion, la valeur estimée de la tension continue élémentaire d'entrée selon l'équation suivante :

$$\widehat{V_{PV_i}}(t_k) = V_{PV_i}(t_{k-1}) + \left( I_{PV_i}(t_k) - I_{H_{i\_M}}(t_k) \right) . \frac{t_k - t_{k-1}}{C_{PV_i}}$$

où $\widehat{V_{PV_i}}(t_k)$ représente la valeur estimée de la tension continue élémentaire d'entrée,

$V_{PVi}(t_{k-1})$ représente une valeur précédente de la tension continue élémentaire d'entrée,

$I_{PVi}(t_k)$ représente la valeur du courant élémentaire d'entrée,

$t_k$, et respectivement $t_{k-1}$, représentent respectivement des instants temporels courant, et respectivement précédent,

$C_{PVi}$ représente la capacité du condensateur,

$I_{Hi\text{-}M}(t_k)$ représente la valeur moyenne du courant de pont entre les instants temporels $t_{k-1}$ et $t_k$ ;

la valeur précédente $V_{PVi}(t_{k-1})$ de la tension continue élémentaire d'entrée étant la valeur précédemment mesurée de la tension continue élémentaire d'entrée si elle a été mesurée pour l'instant temporel précédent, ou bien la précédente valeur estimée de la tension continue élémentaire d'entrée si ladite valeur précédemment mesurée a été mesurée pour un instant temporel antérieur à l'instant temporel précédent ;

ladite valeur moyenne $I_{Hi\_M}(t_k)$ du courant de pont vérifiant de préférence l'équation suivante :

$$I_{H_{i\_M}}(t_k) = \frac{1}{t_k - t_{k-1}} \int_{t_{k-1}}^{t_k} I_{H_i}(t) . dt$$

- le contrôleur principal comporte en outre un deuxième estimateur configuré pour calculer, pour chaque module de conversion, une moyenne estimée du courant élémentaire d'entrée reçu par le module de conversion, la moyenne estimée du courant élémentaire d'entrée étant alors utilisée pour calculer la valeur estimée de la tension continue élémentaire d'entrée ;
- le deuxième estimateur est configuré pour calculer, pour chaque module de conversion, la moyenne estimée du courant élémentaire d'entrée sur une durée de moyennement, en fonction de la tension totale de sortie et d'un courant de sortie délivrés en sortie du convertisseur d'énergie, et d'une valeur moyenne de la tension continue élémentaire d'entrée sur la durée de moyennement ;
  la durée de moyennement dépendant de préférence d'une demi-période de la tension de sortie ;
- le deuxième estimateur est configuré pour calculer, pour chaque module de conversion, la moyenne estimée du courant élémentaire d'entrée selon l'équation suivante :

$$< I_{PV_i} > = \frac{1}{T_g} . \frac{\int_{t_0}^{t_0 + T_g} V_S(t) . I_S(t) . |K_i(t)| \, dt}{< V_{PV_i} >}$$

où $<I_{PVi}>$ représente la moyenne estimée du courant élémentaire d'entrée,

$T_g$ représente la durée de moyennement,

$V_S$ représente la tension totale de sortie,

$I_S$ représente le courant de sortie,

$<V_{PVi}>$ représente la valeur moyenne de la tension continue élémentaire d'entrée sur ladite durée de moyennement, et

$K_i$ représente un coefficient de connexion, $K_i$ étant égal à 0 lorsqu'aucune source d'énergie n'est connectée en entrée du module de conversion correspondant et différent de 0 lorsqu'au moins une source d'énergie est connectée en entrée dudit module ;

la durée de moyennement étant de préférence un multiple de la demi-période de la tension de sortie, ledit multiple étant un nombre entier de valeur supérieure ou égale à 1 ;

- le contrôleur principal comporte en outre un troisième estimateur configuré pour calculer, pour chaque module de conversion, une valeur estimée de la capacité du condensateur ;
- le troisième estimateur est configuré pour estimer une valeur courante de la capacité du condensateur en corrigeant une précédente valeur estimée de la capacité du condensateur en fonction d'une part du signe de la différence entre une valeur d'un courant de pont reçu par le pont de commutation et une valeur d'un courant élémentaire d'entrée reçu par le module de conversion, dit premier signe, et d'autre part du signe de la différence entre la valeur estimée de la tension continue élémentaire d'entrée et la valeur postérieurement mesurée de la tension continue élémentaire d'entrée, dit deuxième signe ; une valeur estimée initiale de la capacité du condensateur étant prédéfinie ;

si les premier et deuxième signes sont identiques, la valeur courante estimée de la capacité du condensateur est de préférence égale à la précédente valeur estimée de la capacité du condensateur diminuée d'un pas de correction ;
si les premier et deuxième signes sont distincts, la valeur courante estimée de la capacité du condensateur est de préférence égale à la précédente valeur estimée de la capacité du condensateur augmentée du pas de correction ;
le pas de correction étant de préférence de l'ordre du pourcent de la valeur initiale de la capacité du condensateur ;

- chaque source d'énergie comporte au moins un élément choisi parmi : un bloc photovoltaïque, une batterie électrique et un supercondensateur ;
- chaque source d'énergie comporte P paire(s) de blocs photovoltaïques, les blocs photovoltaïques d'une paire respective étant connectés en cascade, P étant un nombre entier supérieur ou égal à 1 ;
si P est strictement supérieur à 1, les paires de blocs photovoltaïques étant de préférence connectées en cascade.
- chaque module de conversion comprend Q condensateurs, où Q, égal au double du nombre P, représente le nombre de blocs photovoltaïques pour la source d'énergie associée au module de conversion, chaque condensateur étant apte à être connecté en parallèle d'un bloc photovoltaïque respectif, les Q condensateurs ayant une capacité sensiblement identique, et

dans lequel lorsque le coefficient de connexion est non nul, sa valeur est un multiple de 1/Q, le multiple étant un entier relatif dont la valeur dépend d'une configuration de connexion des blocs photovoltaïques et d'un état de connexion de chacun des blocs photovoltaïques, chaque état de connexion étant parmi connecté et déconnecté.

L'invention a également pour objet un système électronique de conversion d'énergie électrique apte à convertir une pluralité de tensions continues d'entrée en une tension totale de sortie et/ou un courant de sortie, le système de conversion comprenant :

- un convertisseur d'énergie apte à délivrer la tension totale de sortie et/ou le courant de sortie à partir de la pluralité de tensions continues d'entrée, chacune étant issue d'une source d'énergie respective ; le convertisseur d'énergie comprenant plusieurs modules de conversion d'énergie, chacun étant apte à recevoir en entrée une tension continue élémentaire d'entrée de la part d'une source d'énergie respective et à délivrer en sortie une tension élémentaire de sortie ; les modules de conversion étant connectés en série par leurs sorties et la tension totale de sortie étant égale à la somme des tensions élémentaires de sortie ; chaque module de conversion comportant plusieurs interrupteurs pour convertir la tension continue élémentaire d'entrée respective en la tension élémentaire de sortie respective,
- un dispositif électronique de pilotage du convertisseur d'énergie électrique, le dispositif électronique de pilotage étant tel que défini ci-dessus.

L'invention a aussi pour objet un procédé de pilotage d'un convertisseur d'énergie électrique,

le convertisseur d'énergie étant apte à délivrer une tension totale de sortie et/ou un courant de sortie à partir de la pluralité de tensions continues d'entrée, dites tensions continues élémentaires d'entrée, chacune étant issue d'une source d'énergie respective ; le convertisseur d'énergie comprenant plusieurs modules de conversion d'énergie, chacun étant apte à recevoir en entrée une tension continue élémentaire d'entrée de la part d'une source d'énergie respective et à délivrer en sortie une tension élémentaire de sortie ; les modules de conversion étant connectés en série par leurs sorties et la tension totale de sortie étant égale à la somme des tensions élémentaires de sortie ; chaque module de conversion comportant plusieurs interrupteurs pour convertir la tension continue élémentaire d'entrée respective en la tension élémentaire de sortie respective,
le procédé de pilotage étant mis en oeuvre par un contrôleur principal connecté à chacun de plusieurs contrôleurs élémentaires, chaque contrôleur élémentaire étant associé à un module de conversion respectif et configuré pour commander les interrupteurs dudit module de conversion, le procédé comprenant :

- effectuer une régulation d'une grandeur de sortie du convertisseur d'énergie en envoyant des ordres de commande aux contrôleurs élémentaires, la régulation étant effectuée en fonction d'ensembles de grandeur(s) élémentaire(s), chaque ensemble de grandeur(s) élémentaire(s) étant associé à un module de conversion respectif, chaque contrôleur élémentaire mesurant régulièrement des valeurs de l'ensemble de grandeur(s) élémentaire(s) pour le module de conversion respectif auquel il est associé, puis les transmettant au contrôleur principal, l'ensemble de grandeur(s) élémentaire(s) comportant la tension continue élémentaire d'entrée,

- calculer, pour chaque module de conversion, une valeur estimée de la tension continue élémentaire d'entrée à partir d'une valeur précédemment mesurée de la tension continue élémentaire d'entrée.

L'invention concerne également un programme d'ordinateur comportant des instructions logicielles qui, lorsqu'elles sont exécutées par un ordinateur, mettent en oeuvre un procédé de pilotage tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

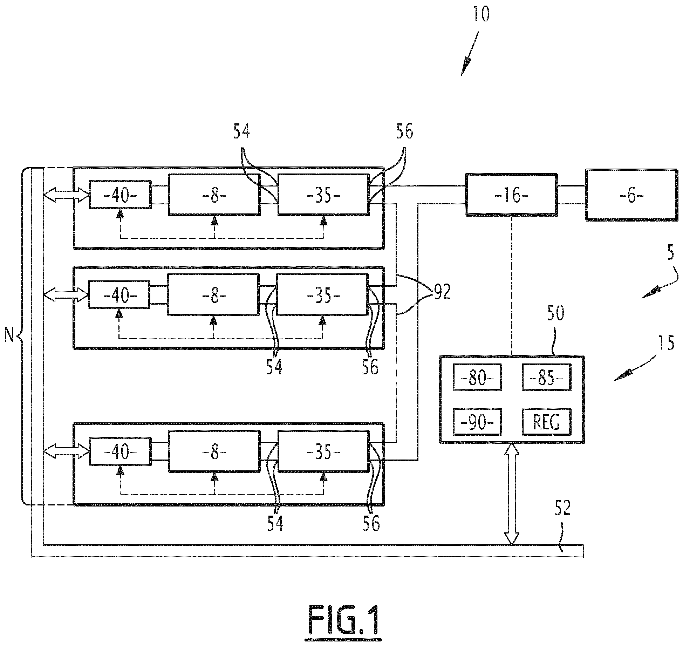

- la figure 1 est une représentation schématique d'un système électronique de conversion d'énergie électrique selon l'invention, le système de conversion comprenant un convertisseur d'énergie apte à délivrer une tension totale de sortie à partir d'une pluralité de tensions continues d'entrée et un dispositif électronique de pilotage du convertisseur d'énergie électrique, chaque tension continue d'entrée étant issue d'une source d'énergie respective ; le convertisseur comportant plusieurs modules de conversion d'énergie, chacun étant apte à recevoir en entrée une tension continue élémentaire d'entrée de la part d'une source d'énergie respective et à délivrer en sortie une tension élémentaire de sortie, chaque module de conversion comportant plusieurs interrupteurs pour convertir la tension continue élémentaire d'entrée respective en la tension élémentaire de sortie respective ; le dispositif électronique de pilotage comportant plusieurs contrôleurs élémentaires et un contrôleur principal connecté à chacun des contrôleurs élémentaires, chaque contrôleur élémentaire étant associé à un module de conversion respectif et configuré pour commander les interrupteurs dudit module de conversion ;
- la figure 2 est un schéma électrique simplifié du convertisseur d'énergie inclus dans le système de conversion de la figure 1, les modules de conversion étant connectés en série par leurs sorties et la tension totale de sortie étant égale à la somme des tensions élémentaires de sortie ;
- la figure 3 est un schéma électrique simplifié représentant d'autres exemples, que ceux représentés à la figure 2, de sources d'énergie à base de blocs photovoltaïques et les modules de conversion associés ;
- la figure 4 est une représentation schématique plus détaillée de chacun des contrôleurs élémentaires, d'une unité de régulation incluse dans le contrôleur principal, ainsi que des paramètres et grandeurs échangés entre le contrôleur principal et les contrôleurs élémentaires ;
- la figure 5 est un organigramme d'un procédé de pilotage du convertisseur d'énergie électrique de la figure 1, mis en oeuvre par le contrôleur principal ;
- la figure 6 est une vue avec trois courbes associées à une tension continue élémentaire d'entrée respective, représentant respectivement une valeur réelle de ladite tension ; une valeur estimée de ladite tension, calculée par un premier estimateur inclus dans le contrôleur principal ; et une valeur mesurée de ladite tension, transmise au contrôleur principal par le contrôleur élémentaire respectif ;
- la figure 7 est une vue avec deux courbes associées à un courant élémentaire d'entrée reçue par un module de conversion respectif, représentant respectivement une valeur réelle dudit courant, et une valeur estimée dudit courant, calculée par un deuxième estimateur inclus dans le contrôleur principal ;

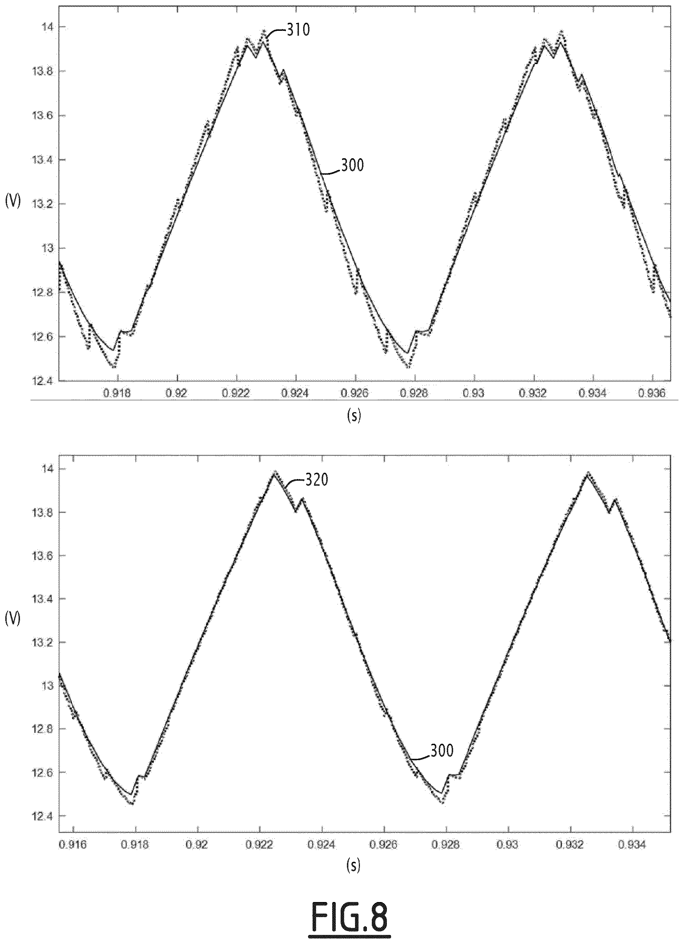

- la figure 8 est une vue avec deux ensembles de courbes, associés à une tension continue élémentaire d'entrée respective ; un premier ensemble comportant deux courbes représentant respectivement une valeur réelle de ladite tension et une valeur estimée de ladite tension, calculée par le premier estimateur ; un deuxième ensemble comportant deux courbes représentant respectivement la valeur réelle de ladite tension et une valeur estimée de ladite tension calculée par le premier estimateur pour laquelle une valeur de la capacité d'un condensateur connecté en entrée du module de conversion est en outre estimée par un troisième estimateur inclus dans le contrôleur principal ;
- la figure 9 est une vue schématique illustrant l'exécution d'un ordre de déconnexion d'un module de conversion respectif, reçu de la part du contrôleur principal ;
- la figure 10 est une vue schématique illustrant l'exécution d'un ordre de connexion d'un module de conversion respectif, reçu de la part du contrôleur principal ;
- la figure 11 est une vue schématique illustrant l'exécution d'un ordre de connexion d'un module de conversion respectif, dans le cas particulier où la fréquence à laquelle sont effectués les calculs de l'unité de régulation incluse dans le contrôleur principal est sensiblement égale à une fréquence de commutation des interrupteurs dudit module de conversion ; et
- la figure 12 est une vue avec trois courbes associées à la sortie du convertisseur d'énergie, représentant respectivement la tension d'un réseau électrique auquel est connectée la sortie du convertisseur, la tension totale de sortie délivrée par le convertisseur, et le courant du réseau électrique.

Dans la présente description, l'expression « de l'ordre de », ainsi que l'expression « sensiblement égal(e) à », s'entendent comme une relation d'égalité à plus ou moins 20 %, de préférence à plus ou moins 10 %, de préférence à plus ou moins 5 %.

Sur la figure 1, un système électronique de conversion d'énergie électrique 5, appelé système de conversion par la suite, est connecté à un réseau électrique 6, notamment pour lui fournir de l'énergie électrique à partir de sources d'énergie 8.

Le système de conversion 5 est apte à convertir une pluralité de tensions continues d'entrée $V_{PV1}$, $V_{PV2}$, ..., $V_{PVN}$, également appelées tensions continues élémentaires d'entrée $U_{PV1}$, $V_{PV2}$, ..., $V_{PVN}$, chacune étant issue d'une source d'énergie 8 respective, en une tension totale de sortie $V_S$, délivrée typiquement au réseau électrique 6 éventuellement par l'intermédiaire d'un filtre 16.

Le système de conversion 5 comprend un convertisseur d'énergie 10 apte à délivrer la tension totale de sortie $V_S$ à partir de la pluralité de tensions continues d'entrée $V_{PV1}$, $V_{PV2}$, ... , $V_{PVN}$ et un dispositif électronique 15 de pilotage du convertisseur d'énergie électrique 10.

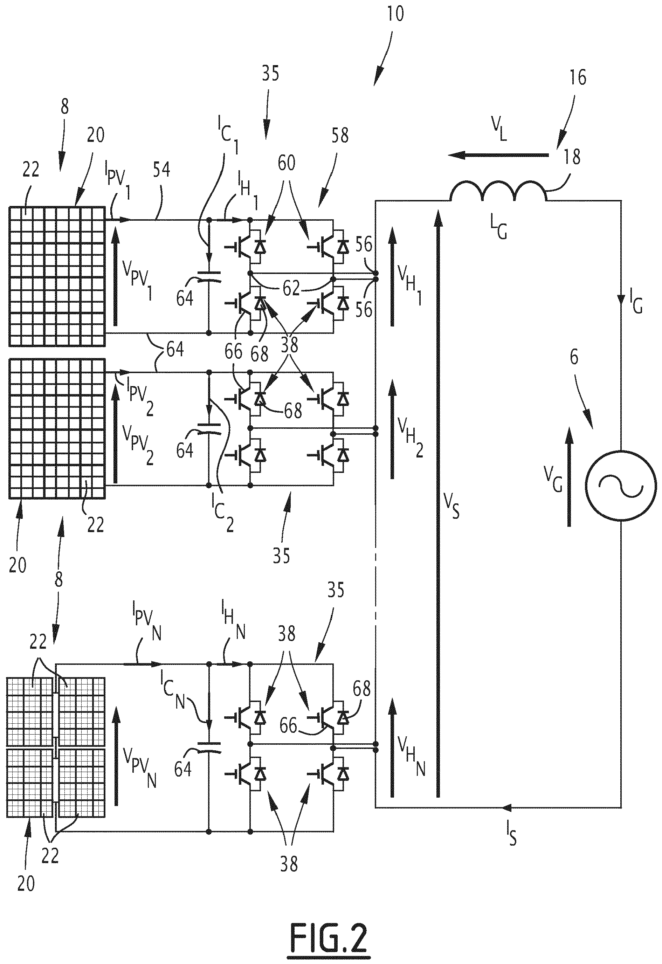

En complément facultatif, le système de conversion 5 comprend un filtre 16. La tension en sortie du filtre 16 alimente en sortie une charge, non représentée, ou est directement reliée au réseau électrique 6, ou encore recharge une batterie, non représentée. Dans l'exemple de la figure 2, le filtre 16 est directement relié au réseau électrique 6, et le filtre 16 est alors connecté entre le convertisseur d'énergie 10 et le réseau électrique 6. En variante, le filtre de sortie 16 est en tout ou partie distribué le long du chemin de puissance, par exemple au niveau de chacun des modules de conversion d'énergie 35, décrits par la suite et inclus dans le convertisseur d'énergie 10.

Dans l'exemple de la figure 2, le filtre 16 est un filtre de type L, et comporte une bobine électromagnétique 18, également appelée inductance de filtrage, la bobine électromagnétique 18 ayant une inductance $L_G$. La tension aux bornes du filtre 16, et plus particulièrement de l'inductance de filtrage 18, est notée $V_L$.

En variante, non représentée, le filtre 16 est un filtre de type LC, et comporte alors une bobine électromagnétique, ou inductance de filtrage, couplée à un condensateur de filtrage. En variante encore, le filtre 16 est un filtre de type LCL, et comporte alors deux bobines électromagnétiques, ou inductances de filtrage, couplées à un condensateur de filtrage.

Le réseau électrique 6 est un réseau électrique alternatif, comme dans l'exemple de la figure 2, ou en variante un réseau électrique continu. Le réseau électrique 6 présente une tension $V_G$ et un courant $I_G$.

Chaque source d'énergie 8 comporte au moins un élément choisi parmi : un bloc photovoltaïque 20, une batterie électrique et un supercondensateur, non représentés.

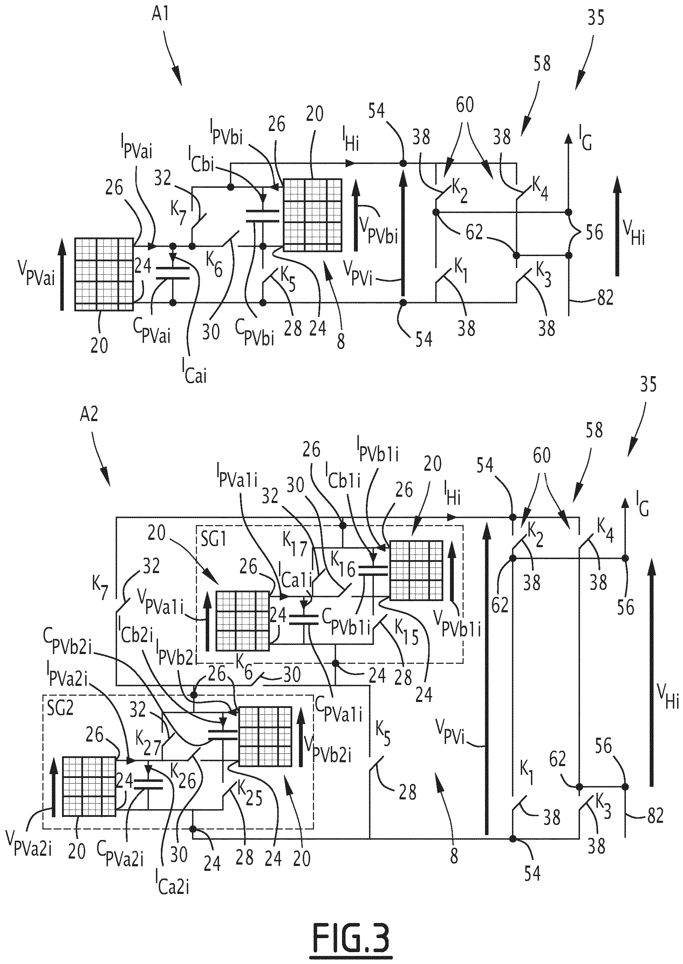

Dans les exemples des figures 2 et 3, chaque source d'énergie 8 est formée d'un ou de plusieurs blocs photovoltaïques 20.

On entend par « bloc photovoltaïque » un ensemble d'une ou plusieurs cellules photovoltaïques. En pratique, un panneau photovoltaïque 22 contient de nombreuses cellules photovoltaïques. Une cellule photovoltaïque est généralement configurée pour délivrer une tension comprise entre 0,4 V et 0,6 V, alors que le panneau photovoltaïque 22 est typiquement configuré pour délivrer une tension de l'ordre de plusieurs dizaines de volts. En outre, il est possible de faire des sous-groupes de cellules photovoltaïques au sein d'un même panneau photovoltaïque 22, et ainsi d'avoir une gestion individualisée de ces sous-groupes de cellules photovoltaïques. L'homme du métier comprendra alors qu'un bloc photovoltaïque 20 est susceptible d'être constitué d'une portion d'un panneau photovoltaïque 22, c'est-à-dire d'un ou de plusieurs sous-groupes de cellules photovoltaïques ; d'un panneau photovoltaïque 22 ; ou encore de plusieurs panneaux photovoltaïques 22.

Dans l'exemple de la figure 2, chaque source d'énergie 8 est formé d'un unique bloc photovoltaïque 20. Dans cet exemple, le bloc photovoltaïque 20 de certaines sources d'énergie 8, telles que les deux premières sources d'énergie présentant les tensions continues élémentaires d'entrée $V_{PV1}$, $V_{PV2}$ est constitué d'un panneau photovoltaïque 22, et le bloc photovoltaïque 20 d'autres sources d'énergie 8 est constitué de plusieurs panneaux photovoltaïques 22, celui associé à la dernière source d'énergie de tension continue élémentaire d'entrée $V_{PVN}$ étant par exemple constitué de quatre panneaux photovoltaïques 22, sous forme d'une mise en série de deux groupes de deux panneaux photovoltaïques 22 en parallèle.

En variante, dans l'exemple de la figure 3, chaque source d'énergie 8 comporte P paire(s) de blocs photovoltaïques 20, les blocs photovoltaïques 20 d'une paire respective étant connectés en cascade, P étant un nombre entier supérieur ou égal à 1.

Selon un premier agencement A1 représenté en partie supérieure de la figure 3, la source d'énergie 8 comporte une seule paire de blocs photovoltaïques 20.

Selon un deuxième agencement A2 représenté en partie inférieure de la figure 3, la source d'énergie 8 comportent plusieurs paires de blocs photovoltaïques 20, en particulier deux paires dans cet exemple, et les paires de blocs photovoltaïques 20 sont elles-mêmes connectées en cascade.

Chaque bloc photovoltaïque 20 comporte deux bornes de connexion 24, 26, à savoir une première borne de connexion 24 et une deuxième borne de connexion 26 ; et pour la connexion en cascade des deux blocs photovoltaïques 20 d'une paire respective, les premières bornes 24 des deux blocs sont connectées entre elles via un premier interrupteur 28, tel que l'interrupteur $K_5$ dans le premier agencement A1, la première borne 24 d'un bloc est connectée à la deuxième borne 26 de l'autre bloc via un deuxième interrupteur 30, tel que l'interrupteur $K_6$ dans ce premier agencement A1, et les deuxièmes bornes 26 des deux blocs sont connectées entre elles via un troisième interrupteur 32, tel que l'interrupteur $K_7$ dans ce premier agencement A1.

Selon le deuxième agencement A2, une première paire de blocs photovoltaïques 20 est référencée SG1, et une deuxième paire de blocs photovoltaïques 20 est référencée SG2. Dans cet exemple, pour la première paire SG1, le premier interrupteur 28 connectant les premières bornes 24 des deux blocs est noté $K_{15}$, le deuxième interrupteur 30 connectant la première borne 24 d'un bloc est connectée à la deuxième borne 26 de l'autre bloc est noté $K_{16}$, et le troisième interrupteur 32 connectant les deuxièmes bornes 26 des deux blocs de ladite première paire SG1 est noté $K_{17}$. Pour la deuxième paire SG1, le premier interrupteur 28 connectant les premières bornes 24 des deux blocs est noté $K_{25}$, le deuxième interrupteur 30 connectant la première borne 24 d'un bloc est connectée à la deuxième borne 26 de l'autre bloc est noté $K_{26}$, et le troisième interrupteur 32 connectant les deuxièmes bornes 26 des deux blocs de ladite première paire SG1 est noté $K_{27}$.

En outre, selon ce deuxième agencement A2, les deux paires SG1, SG2 de blocs photovoltaïques 20 sont elles-mêmes connectées en cascade. Par analogie avec la connexion en cascade de deux blocs photovoltaïques 20 décrite ci-dessus, chaque paire SG1, SG2 de blocs photovoltaïques comporte elle-même deux bornes de connexion 24, 26, à savoir une première borne de connexion 24 et une deuxième borne de connexion 26 ; et pour la connexion en cascade des deux paires SG1, SG2, les premières bornes 24 des deux paires SG1, SG2 sont connectées entre elles via le premier interrupteur 28, tel que l'interrupteur $K_5$ dans le deuxième agencement A2, la première borne 24 de la paire SG1 est connectée à la deuxième borne 26 de la paire SG2 via le deuxième interrupteur 30, tel que l'interrupteur $K_6$ dans ce deuxième agencement A2, et les deuxièmes bornes 26 des deux paires SG1, SG2 sont connectées entre elles via le troisième interrupteur 32, tel que l'interrupteur $K_7$ dans ce deuxième agencement A2.

L'homme du métier comprendra que ce principe de connexion en cascade est généralisable et applicable de la même manière à deux lots de deux paires de blocs photovoltaïques 20, pour obtenir deux lots connectés en cascade, avec lesdits deux lots comportant au global huit blocs photovoltaïques 20 cascadés ; et ainsi de suite.

Le convertisseur d'énergie 10 comprend plusieurs modules de conversion d'énergie 35, chacun étant apte à recevoir en entrée une tension continue élémentaire d'entrée $V_{PV1}$, $V_{PV2}$, ..., $V_{PVN}$ de la part d'une source d'énergie 8 respective et à délivrer en sortie une tension élémentaire de sortie $V_{H1}$, $V_{H2}$, ..., $V_{HN}$. La tension continue élémentaire d'entrée est notée $V_{PVi}$ de manière générale, et la tension élémentaire de sortie est notée $V_{Hi}$ de manière générale, avec i indice entier compris entre 1 et N, où N représente le nombre de modules de conversion d'énergie 35, comme illustré dans les exemples des figures 2 et 3. Les modules de conversion 35 sont connectés en série par leurs sorties et la tension totale de sortie $V_S$ est alors égale à la somme des tensions élémentaires de sortie $V_{H1}$, $V_{H2}$, ..., $V_{HN}$. Chaque module de conversion 35 comporte plusieurs interrupteurs 38 pour convertir la tension continue élémentaire d'entrée respective en la tension élémentaire de sortie respective.

Le convertisseur d'énergie 10 présente alors par exemple une topologie CHBMLI (de l'anglais *Cascaded H-Bridge Multilevel Inverter*).

Lorsque le réseau électrique 6 est un réseau électrique alternatif, comme dans l'exemple de la figure 2, ainsi que dans celui de la figure 3, le convertisseur d'énergie 10 est alors un convertisseur continu-alternatif, également noté DC-AC (de l'anglais *Direct Current - Alternating Current*), configuré pour convertir la pluralité de tensions continues élémentaires d'entrée $V_{PV1}$, $V_{PV2}$, ..., $V_{PVN}$ en la tension totale de sortie $V_S$, qui est alors une tension alternative. Chaque module de conversion d'énergie 35 est alors également un module de conversion continu-alternatif configuré pour convertir chaque tension continue élémentaire d'entrée $V_{PVi}$ respective, en la tension élémentaire de sortie $V_{Hi}$ respective, qui est alors une tension alternative.

En variante, lorsque le réseau électrique 6 est un réseau électrique continu, le convertisseur d'énergie 10 est alors un convertisseur continu-continu, également noté DC-DC (de l'anglais *Direct Current - Direct Current*), configuré pour convertir la pluralité de tensions continues élémentaires d'entrée $V_{PV1}$, $V_{PV2}$, ... , $V_{PVN}$ en la tension totale de sortie $V_S$, qui est alors une tension continue. Chaque module de conversion d'énergie 35 est alors également un module de conversion continu-continu configuré pour convertir chaque tension continue élémentaire d'entrée $V_{PVi}$ respective, en la tension élémentaire de sortie $V_{Hi}$ respective, qui est alors une tension continue.

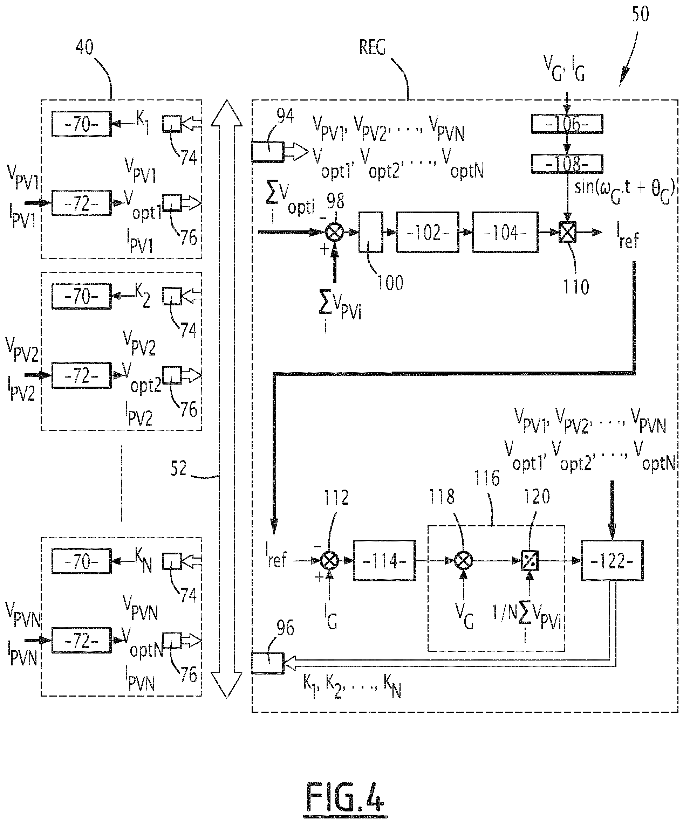

Le dispositif électronique de pilotage 15 comprend plusieurs contrôleurs élémentaires 40 et un contrôleur principal 50 connecté à chacun des contrôleurs élémentaires 40. Dans l'exemple des figures 1 et 4, le contrôleur principal 50 est connecté aux contrôleurs élémentaires 40 via un bus de données 52. En d'autres termes, le contrôleur principal 50 et chacun des contrôleurs élémentaires 40 sont connectés au bus de données 52. En variante, non représentée, chaque contrôleur élémentaire 40 est connecté au contrôleur principal 50 via une connexion point à point, également appelée liaison point à point.

Dans les exemples des figures 2 et 3, chaque module de conversion 35 comprend deux bornes d'entrée 54, deux bornes de sortie 56, un pont de commutation 58 avec plusieurs branches de commutation 60, chacune connectée entre les deux bornes d'entrée 54 et comportant plusieurs interrupteurs 38 connectés en série et reliés entre eux un point milieu 62 connecté à une borne de sortie 56 correspondante.

En complément, chaque module de conversion 35 comprend en outre un condensateur 64 connecté entre les bornes d'entrée 54, en parallèle du pont de commutation 58.

Dans les exemples des figures 2 et 3, le pont de commutation 58 est un pont en H, et comporte alors deux branches de commutation 60, comme connu en soi. Chaque branche de commutation 60 comporte typiquement deux interrupteurs 38 connectés en série, et le pont de commutation 58 comporte alors quatre interrupteurs 38, également notés $K_1$, $K_2$, $K_3$, $K_4$, comme représenté sur la figure 3.

Dans l'exemple de la figure 3, lorsque chaque source d'énergie 8 comporte P paire(s) de blocs photovoltaïques 20, chaque module de conversion 35 comprend Q condensateurs 64, où Q, égal au double du nombre P, représente le nombre de blocs photovoltaïques 20 pour la source d'énergie 8 associée au module de conversion 35, chaque condensateur 64 étant apte à être connecté en parallèle d'un bloc photovoltaïque 20 respectif. Dans cet exemple, les Q condensateurs 64 ont avantageusement une capacité sensiblement identique.

Chaque interrupteur 38 est de préférence un interrupteur bidirectionnel en tension. Chaque interrupteur 38 comporte par exemple un transistor 66 et une diode 68 connectée en antiparallèle du transistor 66, comme représenté sur la figure 2. Le transistor 66 est, par exemple, un transistor à effet de champ à grille isolée, également appelé MOSFET (de l'anglais *Metal Oxide Semiconductor Field Effect Transistor*). En variante, le transistor 66 est un transistor bipolaire ; un transistor bipolaire à grille isolée, également appelé IGBT (de l'anglais *Insulated Gate Bipolar Transistor*) ; un transistor à base de silicium (Si), un transistor à base de GaN (de l'anglais *Gallium Nitride*) ; un transistor à base de carbure de silicium (SiC), ou un transistor à base de diamant, ou encore un thyristor, ou encore un switch mécanique, tel qu'un micro-switch MEMS (de l'anglais *MicroElectroMechanical System*). De manière analogue, les premier, deuxième et troisième interrupteurs 28, 30, 32 comportent également un transistor et une diode connectée en antiparallèle du transistor, non représentés. Le transistor de chacun des premier, deuxième et troisième interrupteurs 28, 30, 32 est selon l'un des exemples décrits précédemment pour le transistor 66, et par exemple du même type que celui du transistor 66.

Chaque contrôleur élémentaire 40 est associé à un module de conversion 35 respectif, et est configuré pour commander les interrupteurs 38 dudit module de conversion 35.

Chaque contrôleur élémentaire 40 est configuré pour mesurer régulièrement des valeurs d'un ensemble de grandeur(s) élémentaire(s) pour le module de conversion 35 respectif auquel il est associé, puis pour les transmettre au contrôleur principal 50.

L'ensemble de grandeur(s) élémentaire(s) comporte la tension continue élémentaire d'entrée $V_{PVi}$ respective. La mesure régulière de la tension continue élémentaire d'entrée $V_{PVi}$ respective est effectuée via un capteur de tension, non représenté, pour chaque module de conversion 35 respectif, chaque capteur de tension étant connecté au contrôleur élémentaire 40 correspondant.

En complément facultatif, l'ensemble de grandeur(s) élémentaire(s) comporte un courant continu élémentaire d'entrée $I_{PVi}$ respectif, issu de la source d'énergie 8 correspondante. Selon ce complément facultatif, la mesure régulière du courant continu élémentaire d'entrée $I_{PVi}$ respectif nécessite alors la présence d'un capteur de courant, non représenté, pour chaque module de conversion 35 respectif, chaque capteur de courant étant connecté au contrôleur élémentaire 40 correspondant.

Chaque contrôleur élémentaire 40 comporte typiquement une unité de pilotage 70 configurée pour piloter le pont de commutation 58 en commandant les interrupteurs 38. En complément facultatif, chaque contrôleur élémentaire 40 comporte une unité de détermination 72 configurée pour déterminer une tension optimale $V_{opt\_i}$ associée au module de conversion 35 respectif. L'unité de détermination 72 est typiquement configurée pour déterminer ladite tension optimale $V_{opt\_i}$ via la mise en oeuvre d'un algorithme de suivi du point maximal de puissance, également appelé algorithme MPPT (de l'anglais *Maximum Power Point Tracking).*

Chaque contrôleur élémentaire 40 comporte également un récepteur 74 et un émetteur 76, chacun compatible avec le protocole de communication du bus de données 52. Autrement dit, le récepteur 74 est apte à recevoir des données de la part du contrôleur principal 50 via le bus de données 52, notamment un coefficient de connexion $K_i$ indiquant s'il est nécessaire ou non de connecter la source d'énergie 8 respective au module de conversion 35 correspondant pour délivrer ensuite la tension élémentaire de sortie $V_{Hi}$ respective. L'émetteur 76 est apte à transmettre régulièrement des données au contrôleur principal 50 via ledit bus 52, notamment une valeur mesurée de la tension continue élémentaire d'entrée $V_{PVi}$ respective, la valeur de la tension optimale $V_{opt\_i}$, voire une valeur mesurée du courant continu élémentaire d'entrée $I_{PVi}$ respectif.

Le contrôleur principal 50 est configuré pour effectuer une régulation d'une grandeur de sortie du convertisseur d'énergie 10 en envoyant des ordres de commande aux contrôleurs élémentaires 40, la régulation étant effectuée en fonction des ensembles de grandeur(s) élémentaire(s), chaque ensemble de grandeur(s) élémentaire(s) étant associé à un module de conversion 35 respectif.

La grandeur de sortie du convertisseur d'énergie 10 faisant l'objet de la régulation par le contrôleur principal 50 est typiquement la tension de sortie $V_S$ ou bien un courant de sortie $I_S$ du convertisseur d'énergie 10. Si le convertisseur d'énergie 10 est connecté à une charge imposant la tension, comme par exemple le réseau électrique 6, alors la grandeur régulée, c'est-à-dire la grandeur à asservir, est le courant de sortie $I_S$. En revanche, si le convertisseur d'énergie 10 est connecté à une charge imposant le courant, par exemple un moteur ou un chargeur de batterie(s), alors la grandeur à asservir est la tension de sortie Vs.

La régulation effectuée par le contrôleur principal 50 est mise en oeuvre au sein d'une unité de régulation REG, décrite plus en détail par la suite en regard de la figure 4.

Selon l'invention, le contrôleur principal 50 comporte un premier estimateur 80, visible sur la figure 1, configuré pour calculer, pour chaque module de conversion 35, une valeur estimée $\widehat{V_{PV_i}}(t_k)$ de la tension continue élémentaire d'entrée $V_{PVi}$ à partir d'une valeur précédemment mesurée $V_{PVi}(t_{k-p})$ de la tension continue élémentaire d'entrée $V_{PVi}$.

En complément facultatif, le contrôleur principal 50 comporte en outre un deuxième estimateur 85 configuré pour calculer, pour chaque module de conversion 35, une moyenne estimée $<I_{PVi}>$ du courant élémentaire d'entrée $I_{PVi}$ reçu par le module de conversion 35, la moyenne estimée $<I_{PVi}>$ du courant élémentaire d'entrée $I_{PVi}$ étant alors utilisée pour calculer la valeur estimée $\widehat{V_{PV_i}}(t_k)$ de la tension continue élémentaire d'entrée $V_{PVi}$.

Selon ce complément facultatif, de par l'estimation du courant élémentaire d'entrée $I_{PVi}$ via le deuxième estimateur 85, il n'est pas nécessaire d'effectuer la mesure du courant élémentaire d'entrée $I_{PVi}$ respectif, et cela évite alors l'ajout d'un capteur de courant pour chaque module de conversion 35 respectif. Selon ce complément facultatif, l'ensemble de grandeur(s) élémentaire(s), mesuré régulièrement pour chaque contrôleur élémentaire 40, comporte alors seulement la tension continue élémentaire d'entrée $V_{PVi}$ respective.

En complément facultatif, le contrôleur principal 50 comporte en outre un troisième estimateur 90 configuré pour calculer, pour chaque module de conversion 35, une valeur estimée $\widehat{C_{PV_i}}$ de la capacité $C_{PVi}$ du condensateur 64.

Dans l'exemple de la figure 1, le premier estimateur 80, ainsi qu'en complément facultatif le deuxième estimateur 85 et le troisième estimateur 90, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit)*.

En variante, le contrôleur principal 50 comprend une unité de traitement d'informations formée par exemple d'une mémoire et d'un processeur associé à la mémoire, non représentés.

Selon cette variante, le premier estimateur 80, ainsi qu'en complément facultatif le deuxième estimateur 85 et le troisième estimateur 90, sont réalisés chacun sous forme d'un logiciel, ou d'une brique logicielle, exécutable par le processeur. La mémoire du contrôleur principal 50 est alors apte à stocker un premier logiciel d'estimation apte à calculer, pour chaque module de conversion 35, la valeur estimée $\widehat{V_{PV_i}}(t_k)$ de la tension continue élémentaire d'entrée $V_{PVi}$ à partir de la valeur précédemment mesurée $V_{PVi}(t_{k-p})$ de la tension continue élémentaire d'entrée $V_{PVi}$. En complément facultatif, la mémoire du contrôleur principal 50 est alors apte à stocker un deuxième logiciel d'estimation apte à calculer, pour chaque module de conversion 35, la moyenne estimée $<I_{PVi}>$ du courant élémentaire d'entrée $I_{PVi}$ reçu par le module de conversion 35, et un troisième logiciel d'estimation apte à calculer, pour chaque module de conversion 35, la valeur estimée $\widehat{C_{PV_i}}$ de la capacité $C_{PVi}$ du condensateur 64. Le processeur du contrôleur principal 50 est alors apte à exécuter chacun des logiciels parmi le premier logiciel d'estimation, ainsi qu'en complément facultatif le deuxième logiciel d'estimation et le troisième logiciel d'estimation. L'homme du métier comprendra en outre que lorsqu'exécuté(s) par ledit processeur, le premier logiciel d'estimation, ainsi qu'en complément facultatif le deuxième logiciel d'estimation et le troisième logiciel d'estimation, forment alors respectivement le premier estimateur 80, le deuxième estimateur 85 et le troisième estimateur 90.

Lorsque le contrôleur principal 50 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

Le bus de données 52, également appelé bus de communication, est par exemple un bus RS-485, la norme RS-485 étant également connue sous l'appellation EIA-485 ; un bus USB (de l'anglais *Universal Serial Bus*), un bus UART (de l'anglais *Universal Asynchronous Receiver Transmitter*), ou encore un bus CAN (de l'anglais *Controller Area Network*), normalisé avec la norme ISO 11898. Le bus de communication 52 possède alors un débit limité, notamment pour des raisons de fiabilité. Dans le cadre d'un système de conversion 5 avec un nombre significatif de modules de conversion 35, typiquement plus de cinq modules de conversion 35, la quantité de données à remonter en temps réel par le bus de communication 52 peut être importante. Ainsi, la fréquence de fonctionnement du convertisseur d'énergie 10 risque d'être limitée par la durée d'acquisition des données.

Pour la topologie CHBMLI, les modules de conversion 35 sont avantageusement connectés au dos des panneaux photovoltaïques 22 de manière à limiter la longueur d'un câble électrique 92, également appelé câble de puissance, connectant les sorties des modules de conversion 35 les unes en série des autres, c'est-à-dire les unes à la suite des autres. Ainsi, le bus de communication 52 parcourt la longueur de la surface de panneaux photovoltaïques 22 (jusqu'à 20 mètres pour un convertisseur 10 de plusieurs kW, connecté sur le réseau 6). Pour la communication, un protocole UART est par exemple utilisé avec une couche physique suivant la norme RS-485. Ce protocole UART est simple à mettre en oeuvre et permet la communication d'un maître avec plusieurs esclaves. La norme RS-485 définit l'envoi de signaux sur le bus en mode différentiel. Sur de longues distances (supérieure à quelques mètres), cela permet de réduire fortement les effets parasites et les erreurs, tout en conservant un débit de données acceptable pour le système de conversion 5 (4Mbit/s). Les modules de conversion 35 sont, par exemple, tous référencés à des points de potentiel différents, et sont alors isolés électriquement les uns des autres. Comme le bus de communication 52 est mutualisé avec l'ensemble des modules de conversion 35, un circuit d'isolation galvanique, non représenté, est utilisé pour échanger des données entre les contrôleurs élémentaires 40 et le bus de communication 52. Cette fonction d'isolation galvanique est par exemple directement intégrée dans des unités de communication RS-485. D'autres solutions d'isolation sont envisageables, telles que l'utilisation d'optocoupleurs, ou encore des circuits spécialisés avec isolation intégrée (par exemple la référence ADUM3472ARSZ proposée par la société Analog Devices™).

La communication via le bus de données 52 entre les différents éléments du système de conversion 5 se fait par exemple en mode « Full-Duplex », c'est-à-dire qu'il y a une ligne dédiée pour la réception, une ligné dédiée pour la transmission, les deux lignes étant utilisables simultanément.

En variante, la communication via le bus de données 52 entre les différents éléments du système de conversion 5 se fait en mode « Half-Duplex » où une seule ligne de communication est utilisée. La transmission et la réception sont alors entrelacées temporellement. Cela permet d'économiser sur le bus de communication 52 (moins de conducteurs dans le bus 52). En contrepartie, le débit est réduit (la transmission et la réception ne pouvant avoir lieu en même temps).

L'unité de régulation REG comporte un récepteur 94 et un émetteur 96, chacun compatible avec le protocole de communication du bus de données 52. Autrement dit, le récepteur 94 est apte à recevoir des données de la part de chacun des contrôleurs élémentaires 40 via le bus de données 52, notamment les valeurs mesurées des tensions continues élémentaires d'entrée $V_{PV1}$, $V_{PV2}$, ..., $V_{PVN}$, les valeurs des tensions optimales $V_{opt\_1}$, $V_{opt\_2}$, ..., $V_{opt\_N}$, voire les valeurs mesurées des courants continus élémentaires d'entrée $I_{PV1}$, $I_{PV2}$, ..., $I_{PVN}$. L'émetteur 96 est apte à transmettre régulièrement des données aux contrôleurs élémentaires 40 via ledit bus 52, notamment les coefficients de connexion $K_1$, $K_2$, ..., $K_N$.

Pour la régulation de la grandeur de sortie, l'unité de régulation REG comporte typiquement une première boucle de régulation d'un premier type de grandeur, suivie d'une deuxième boucle de régulation d'un deuxième type de grandeur, distinct du premier type.

Dans l'exemple de la figure 2 où le convertisseur d'énergie 10 est connecté au réseau électrique 6, la grandeur de sortie régulée est le courant de sortie $I_S$, et la première boucle de régulation est une boucle de régulation en tension, la deuxième boucle de régulation étant une boucle de régulation en courant.

Dans l'exemple de la figure 4 associé à cet exemple de la figure 2, la première boucle de régulation comporte un additionneur 98 apte à faire la différence entre la somme des valeurs des tensions continues élémentaires d'entrée $V_{PV1}$, $V_{PV2}$, ... , $V_{PVN}$ et la somme des valeurs des tensions optimales $V_{opt\_1}$, $V_{opt\_2}$, ..., $V_{opt\_N}$; suivi d'un moyenneur 100, afin de comparer alors la moyenne des tensions continues élémentaires d'entrée $V_{PV1}$, $V_{PV2}$, ..., $V_{PVN}$ avec la moyenne des tensions optimales $V_{opt\_1}$, $V_{opt\_2}$, ..., $V_{opt\_N}$. En complément, la première boucle comporte un correcteur 102 connecté en sortie du moyenneur 100 afin d'annuler l'erreur entre la moyenne des tensions continues élémentaires d'entrée $V_{PV1}$, $V_{PV2}$, ... , $V_{PVN}$ et celle des tensions optimales $V_{opt\_1}$, $V_{opt\_2}$, ..., $V_{opt\_N}$ en régime statique. Le correcteur 102 est par exemple un correcteur de type proportionnel intégral, également appelé correcteur PI. En variante, le correcteur 102 est un correcteur de type proportionnel intégral dérivé, également appelé correcteur PID.

Avantageusement, la première boucle de régulation comporte également un filtre 104, tel qu'un filtre coupe-bande autour d'une fréquence sensiblement égale à 100 Hz pour un réseau à 50Hz (ou 120 Hz pour un réseau à 60Hz). En effet, les modules de conversion 35 produisent une puissance continue, tandis que la puissance de sortie, sur le réseau électrique 6, est une puissance alternative. Cela signifie que, sur une demi-période réseau (100 Hz ou 120Hz), lorsque la puissance instantanée de sortie est inférieure (respectivement supérieure) à la somme des puissances des modules de conversion 35, le surplus d'énergie est stocké (respectivement restitué) par les condensateurs 64 des modules de conversion 35. Sur une demi-période réseau et en régime permanent, chaque condensateur 64 a stocké autant d'énergie qu'il en a restitué. Cela provoque une oscillation naturelle à 100 Hz sur la tension des sources d'énergie 8, telles que les blocs photovoltaïques 20, dont l'amplitude est inversement proportionnelle à la valeur du condensateur 64 et proportionnelle au courant continu élémentaire d'entrée $I_{PVi}$ issu de la source d'énergie 8, par exemple issu d'un bloc photovoltaïque 20. Cette oscillation est alors supprimée par le filtre 104 pour éviter de la retrouver sur un courant de référence $I_{ref}$ délivré en sortie de la première boucle de régulation.

Pour obtenir un courant de référence $I_{ref}$ sinusoïdal, la première boucle de régulation comporte avantageusement en outre une unité de Boucle à Verrouillage de Phase (BVP) 106, également appelé unité PLL (de l'anglais *Phase Locked Loop*), recevant en entrée la tension $V_G$ du réseau électrique 6, ainsi que le courant $I_G$ dudit réseau 6. L'unité PLL 106 est alors connectée en entrée d'une fonction sinus 108 pour générer un terme en $\sin(\omega_G t + \theta_G)$, c'est-à-dire une fonction sinusoïdale d'amplitude unitaire en phase avec la tension réseau $V_G$. D'autres mécanismes sont envisageables pour obtenir cette fonction sinusoïdale d'amplitude unitaire en phase avec la tension réseau $V_G$, par exemple en divisant la tension réseau $V_G$ par son amplitude.

La première boucle de régulation comporte enfin un multiplieur 110 connecté, d'une part en sortie du filtre 104, et d'autre part en sortie de la fonction sinus 108, afin de multiplier le terme en $\sin(\omega_G t + \theta_G)$ avec le courant obtenu en sortie du filtre 104, pour générer le courant de référence $I_{ref}$ rendu ainsi sinusoïdal.

Dans l'exemple de la figure 4, la deuxième boucle de régulation vise alors à comparer le courant de référence $I_{ref}$ sinusoïdal avec le courant $I_G$ dudit réseau 6, correspondant au courant de sortie $I_S$ du convertisseur d'énergie 10, la grandeur de sortie régulée étant dans cet exemple le courant de sortie $I_S$.

Dans cet exemple, la deuxième boucle de régulation comporte un soustracteur 112 apte à faire la différence entre le courant réseau $I_G$ et le courant de référence $I_{ref}$, suivi d'un régulateur 114, préférentiellement un régulateur de type proportionnel résonant, également appelé régulateur PR, qui permet d'annuler l'erreur de suivi de consigne même avec une référence sinusoïdale (de fréquence connue).

La deuxième boucle de régulation comporte ensuite un bloc de linéarisation 116 connecté en sortie du régulateur 114, le bloc de linéarisation 116 incluant un additionneur 118 pour sommer la tension réseau $V_G$ à la sortie du régulateur 114, suivi d'un diviseur 120 pour diviser cette somme par la moyenne des tensions continues élémentaires d'entrée $V_{PV1}$, $V_{PV2}$, ..., $V_{PVN}$.

La deuxième boucle de régulation comporte enfin une unité de tri 122 connectée en sortie du bloc de linéarisation 116, l'unité de tri 122 mettant en oeuvre un algorithme de tri sélectionnant les sources d'énergie 8 qui seront ou non connectées lors de la prochaine itération de pilotage. Les sources d'énergie 8 connectées en priorité sont celles dont l'erreur de tension ($V_{PVi}$ - $V_{opti}$) est la plus grande parmi la liste des sources d'énergie 8, telles que les blocs photovoltaïques 20, en état de fonctionner. Les éventuelles sources d'énergie 8 défaillantes peuvent être écartées du fonctionnement. L'unité de tri 122 est alors configurée pour générer les coefficients de connexion $K_1$, $K_2$, ..., $K_N$.

Le premier estimateur 80 est configuré pour calculer, pour chaque module de conversion 35, la valeur estimée $\widehat{V_{PV_i}}(t_k)$ de la tension continue élémentaire d'entrée $V_{PVi}$ en fonction de la valeur précédemment mesurée $V_{PVi}(t_{k-p})$ de la tension continue élémentaire d'entrée $V_{PVi}$, de la capacité $C_{PVi}$ du condensateur 64 et d'une valeur du courant $I_{Ci}$ circulant à travers ledit condensateur 64.

Avantageusement, le premier estimateur 80 est configuré pour calculer la valeur du courant $I_{Ci}$ circulant à travers ledit condensateur 64 par différence entre une valeur d'un courant élémentaire d'entrée $I_{PVi}$ reçu par le module de conversion 35 et une valeur d'un courant de pont $I_{Hi}$ reçu par le pont de commutation 58.

Le premier estimateur 80 est, par exemple, configuré pour calculer, pour chaque module de conversion 35, la valeur estimée $\widehat{V_{PV_i}}(t_k)$ de la tension continue élémentaire d'entrée $V_{PVi}$ selon l'équation suivante :

[1]

$$\widehat{V_{PV_i}}(t_k) = V_{PV_i}(t_{k-1}) + \left(I_{PV_i}(t_k) - I_{H_i\_M}(t_k)\right) . \frac{t_k - t_{k-1}}{C_{PV_i}}$$

où $\widehat{V_{PV_i}}(t_k)$ représente la valeur estimée de la tension continue élémentaire d'entrée $V_{PVi}$,
$V_{PVi}(t_{k-1})$ représente une valeur précédente de la tension continue élémentaire d'entrée $V_{PVi}$,
$I_{PVi}(t_k)$ représente la valeur du courant élémentaire d'entrée $I_{PVi}$,
$t_k$, et respectivement $t_{k-1}$, représentent respectivement des instants temporels courant, et respectivement précédent,
$C_{PVi}$ représente la capacité du condensateur 64, et
$I_{Hi\_M}(t_k)$ représente la valeur moyenne du courant de pont $I_{Hi}$ entre les instants temporels $t_{k-1}$ et $t_k$.

La valeur précédente $V_{PVi}(t_{k-1})$ de la tension continue élémentaire d'entrée $V_{PVi}$ est la valeur précédemment mesurée $V_{PVi}(t_{k-p})$ de la tension continue élémentaire d'entrée $V_{PVi}$ si elle a été mesurée pour l'instant temporel précédent, c'est-à-dire si l'instant temporel précédent $t_{k-1}$ correspond à l'instant temporel de la précédente mesure de la tension continue élémentaire d'entrée $V_{PVi}$, i.e. k-1=k-p, soit p=1. Alternativement, la valeur précédente $V_{PVi}(t_{k-1})$ de la tension continue élémentaire d'entrée $V_{PVi}$ est la précédente valeur estimée $\widehat{V_{PV_i}}(t_{k-1})$ de la tension continue élémentaire d'entrée $V_{PVi}$ si ladite valeur précédemment mesurée $V_{PVi}(t_{k-p})$ a été mesurée pour un instant temporel $t_{k-p}$ antérieur à l'instant temporel précédent $t_{k-1}$, c'est-à-dire si l'instant temporel précédent $t_{k-1}$ est postérieur à l'instant temporel de la précédente mesure de la tension continue élémentaire d'entrée $V_{PVi}$, i.e. k-1 >k-p, soit p>1.

L'homme du métier comprendra que l'équation [1] précédente est obtenue à partir de l'équation suivante :

[2]

$$I_{PV_i}(t) = I_{C_i}(t) + I_{H_i}(t) = C_{PV_i}.\frac{dV_{PV_i}(t)}{dt} + I_{H_i}(t)$$

où $I_{PVi}$ représente le courant élémentaire d'entrée,
$I_{Ci}$ représente le courant circulant à travers le condensateur 64,
$I_{Hi}$ représente le courant reçu par le pont de commutation 58,
$C_{PVi}$ représente la capacité du condensateur 64, et
$V_{PVi}$ représente la tension continue élémentaire d'entrée, ces grandeurs étant visibles à la figure 2.

La valeur moyenne $I_{Hi\_M}(t_k)$ du courant de pont $I_{Hi}$ vérifie, par exemple, l'équation suivante :

[3]

$$I_{H_{i\_M}}(t_k) = \frac{1}{t_k - t_{k-1}}\int_{t_{k-1}}^{t_k} I_{H_i}(t).dt = f_B.\int_{t_{k-1}}^{t_k} I_{H_i}(t).dt$$

où $f_B$ représente la fréquence à laquelle la régulation de la grandeur de sortie $I_S$, $V_S$ du convertisseur d'énergie 10 est effectuée par le contrôleur principal 50, c'est-à-dire la fréquence d'une boucle de régulation de ladite grandeur de sortie $I_S$, $V_S$, décrite par la suite en regard de la figure 8.

L'homme du métier observera que la fréquence $f_B$ à laquelle la régulation de la grandeur de sortie $I_S$, $V_S$ est effectuée par le contrôleur principal 50 correspond également à la fréquence à laquelle seront effectuées les estimations de la tension continue élémentaire d'entrée $V_{PVi}$ par le contrôleur principal 50, cette fréquence $f_B$ de la boucle de régulation étant égale à l'inverse de la durée entre deux instants temporels successifs $t_{k-1}$ et $t_k$ de calcul de ladite estimation. La fréquence $f_B$ de la boucle de régulation de la grandeur de sortie $I_S$, $V_S$ correspond alors également à la fréquence de fonctionnement du contrôleur principal 50.

L'homme du métier notera que, lorsque le module de conversion 35 est configuré en polarité positive ou négative, le courant $I_{Hi}$ reçu par le pont de commutation 58, c'est-à-dire le courant d'entrée du pont de commutation 58, correspond à +/-$I_S$, c'est-à-dire à +/-$I_G$ si le convertisseur 10 est connecté au réseau 6 ; et lorsque le module de conversion 35 est en mode bypass ou ouvert, le courant $I_{Hi}$ reçu par le pont de commutation 58 est nul. Le courant de sortie Is, ou encore le courant $I_G$ du réseau 6, est mesuré directement par le contrôleur principal 50, et est échantillonné à la fréquence $f_B$ de la boucle de régulation, dite fréquence de boucle $f_B$ par la suite. Par ailleurs, le contrôleur principal 50 connaît, à chaque instant, la configuration de tous les modules de conversion 35, puisque c'est lui qui détermine ces configurations, et les commande, i.e. pilote, ensuite via les contrôleurs élémentaires 40. Le contrôleur principal 50 est donc apte à déterminer la valeur du courant $I_{Hi}$ reçu par le pont de commutation 58, avec des instants d'échantillonnage selon la fréquence de boucle $f_B$.

En complément facultatif, le deuxième estimateur 85 est configuré pour calculer, pour chaque module de conversion 35, la moyenne estimée <$I_{PVi}$> du courant élémentaire d'entrée $I_{PVi}$ sur une durée de moyennement $T_g$, en fonction de la tension totale de sortie $V_S$ et du courant de sortie $I_S$ délivrés en sortie du convertisseur d'énergie 10, et d'une valeur moyenne <$V_{PVi}$> de la tension continue élémentaire d'entrée $V_{PVi}$ sur la durée de moyennement $T_g$.

La durée de moyennement $T_g$ dépend typiquement d'une demi-période de la tension de sortie $V_S$. La durée de moyennement $T_g$ est de préférence un multiple de la demi-période de la tension de sortie $V_S$, ledit multiple étant un nombre entier de valeur supérieure ou égale à 1. La durée de moyennement $T_g$ est de préférence encore sensiblement égale à la période de la tension de sortie $V_S$.

Le deuxième estimateur 85 est, par exemple, configuré pour calculer, pour chaque module de conversion 35, la moyenne estimée $<I_{PV_i}>$ du courant élémentaire d'entrée $I_{PVi}$ selon l'équation suivante :

[4]

$$< I_{PV_i} > = \frac{1}{T_g} \cdot \frac{\int_{t_0}^{t_0+T_g} V_S(t).I_S(t).|K_i(t)|\, dt}{< V_{PV_i} >}$$

où $< I_{PV_i} >$ représente la moyenne estimée du courant élémentaire d'entrée $I_{PVi}$,

$T_g$ représente la durée de moyennement,

$V_S$ représente la tension totale de sortie,

$I_S$ représente le courant de sortie,

$< V_{PV_i} >$ représente la valeur moyenne de la tension continue élémentaire d'entrée $V_{PVi}$ sur ladite durée de moyennement $T_g$, et

$K_i$ représente un coefficient de connexion, $K_i$ étant égal à 0 lorsqu'aucune source d'énergie 8 n'est connectée en entrée du module de conversion 35 correspondant, et $K_i$ étant différent de 0 lorsqu'au moins une source d'énergie 8 est connectée en entrée dudit module 35.

Lorsque la source d'énergie 8 est formée d'un unique bloc photovoltaïque 20, comme dans l'exemple de la figure 2, le coefficient de connexion $K_i$ associé est égal à +1 quand le module de conversion 35 est connecté en polarité positive, égal à -1 quand le module de conversion 35 est connecté en polarité négative, et égal à 0 quand le module de conversion 35 est déconnecté (by-pass ou ouvert).

Lorsque la source d'énergie 8 est formée de plusieurs blocs photovoltaïques 20, comme dans l'exemple de la figure 3, le coefficient de connexion $K_i$ associé est - lorsqu'il est non nul - un multiple de 1/Q, où Q représente le nombre de blocs photovoltaïques 20 pour la source d'énergie 8 associée au module de conversion 35. Le multiple est un entier relatif, c'est-à-dire un nombre entier positif ou négatif, dont la valeur dépend d'une configuration de connexion des blocs photovoltaïques 20 et d'un état de connexion de chacun des blocs photovoltaïques 20, chaque état de connexion étant parmi connecté et déconnecté.

Des exemples de valeur du coefficient de connexion $K_i$ associé à une source d'énergie 8 formée de plusieurs blocs photovoltaïques 20 sont décrits par la suite en regard du tableau 1 dans l'exemple du premier agencement A1 de la figure 3, et en regard du tableau 2 dans l'exemple du deuxième agencement A2 de cette figure 3.

Le troisième estimateur 90 est configuré pour estimer une valeur courante de la capacité $C_{PVi}$ du condensateur 64.

La valeur de la capacité $C_{PVi}$ du condensateur 64 est typiquement fournie par le fabricant dudit condensateur 64 avec une tolérance pouvant aller jusqu'à +/- 30%, et cette capacité $C_{PVi}$ varie avec le temps. Il est donc avantageux d'estimer, via le troisième estimateur 90 et avec une meilleure précision, sa valeur durant le fonctionnement du convertisseur d'énergie 10.

Le troisième estimateur 90 est typiquement configuré pour estimer une valeur courante de la capacité $C_{PVi}$ du condensateur 64 en corrigeant une précédente valeur estimée de la capacité $C_{PVi}$ du condensateur 64 en fonction, d'une part, du signe de la différence entre une valeur d'un courant de pont $I_{Hi}$ reçu par le pont de commutation 58 et une valeur d'un courant élémentaire d'entrée $I_{PVi}$ reçu par le module de conversion 35, dit premier signe ; et d'autre part, du signe de la différence entre la valeur estimée $\widehat{V_{PV_i}}(t_k)$ de la tension continue élémentaire d'entrée $V_{PVi}$ et la valeur postérieurement mesurée $V_{PVi}(t_{k+1})$ de la tension continue élémentaire d'entrée $V_{PVi}$, dit deuxième signe ; une valeur estimée initiale de la capacité $C_{PVi}$ du condensateur 64 étant prédéfinie.

Si les premier et deuxième signes sont identiques, la valeur courante estimée de la capacité $C_{PVi}$ du condensateur 64 est, par exemple, égale à la précédente valeur estimée de la capacité $C_{PVi}$ du condensateur 64 diminuée d'un pas de correction $\Delta C_{PVi}$ ; et si les premier et deuxième signes sont distincts, la valeur courante estimée de la capacité $C_{PVi}$ du condensateur 64 est, par exemple, égale à la précédente valeur estimée de la capacité $C_{PVi}$ du condensateur 64 augmentée du pas de correction $\Delta C_{PVi}$.

Le pas de correction $\Delta C_{PVi}$ est, par exemple, de l'ordre du pourcent de la valeur initiale de la capacité $C_{PVi}$ du condensateur 64.

Autrement dit, le principe du troisième estimateur 90 est de comparer les données estimées avec les données réelles remontées par le bus de communication 52. En effet, la valeur de la capacité $C_{PVi}$ du condensateur 64 est la seule donnée de l'équation (2) ou de l'équation (1) qui n'est pas parfaitement connue, au début du fonctionnement du convertisseur d'énergie 10. Ainsi, lorsque le contrôleur principal 50 reçoit une nouvelle valeur mesurée de la tension continue élémentaire d'entrée $V_{PVi}$, celui-ci va comparer la tension qu'il a estimé (grâce à son premier estimateur 80) avec celle mesurée.

Il y a alors plusieurs cas à prendre en compte :

- Si

$$I_{H_i}(t_k) - I_{PV_i}(t_k) > 0 :$$

+ si la tension estimée est supérieure à la tension réelle, alors la valeur de la capacité $C_{PVi}$ du condensateur 64 (prise en compte dans l'équation (1)) est trop grande par rapport à la valeur réelle ;
+ si la tension estimée est inférieure à la tension réelle, alors la valeur de la capacité $C_{PVi}$ du condensateur 64 (prise en compte dans l'équation (1)) est trop faible par rapport à la valeur réelle.

- Si

$$I_{H_i}(t_k) - I_{PV_i}(t_k) < 0 :$$

+ si la tension estimée est inférieure à la tension réelle, alors la valeur de la capacité $C_{PVi}$ du condensateur 64 (prise en compte dans l'équation (1)) est trop grande par rapport à la valeur réelle ;
+ si la tension estimée est supérieure à la tension réelle, alors la valeur de la capacité $C_{PVi}$ du condensateur 64 (prise en compte dans l'équation (1)) est faible par rapport à la valeur réelle.

- Si la tension estimée est égale à la tension réelle, alors la valeur de la capacité $C_{PVi}$ du condensateur 64 (prise en compte dans l'équation (1)) est égale à la valeur réelle.

L'algorithme de correction de la valeur du condensateur 64 par pas successifs permet rapidement (en quelques périodes de la tension réseau $V_G$) de retrouver la valeur réelle de la capacité $C_{PVi}$ de chaque condensateur 64 du système de conversion 5. Cela offre plusieurs avantages. Premièrement, cela améliore le premier estimateur 80 grâce à une meilleure précision sur l'estimation de la tension continue élémentaire d'entrée $V_{PVi}$. Deuxièmement, cela permet d'avoir un suivi de l'évolution des éléments passifs des modules de conversion 35. En effet, dans un convertisseur d'électronique de puissance, les condensateurs sont souvent les éléments les plus fragiles et leur vieillissement se caractérise, généralement, par une diminution progressive de la valeur réelle de leur capacité. Ce troisième estimateur 90 permet donc d'anticiper les futures pannes et de cibler les réparations.

Dans l'exemple du premier agencement A1 de la figure 3, le module de conversion 35 est couplé à deux blocs photovoltaïques 20, notés $P_{ai}$ et $P_{bi}$, sont configurables dynamiquement en série ou en parallèle, suivant l'état des premier, deuxième et troisième interrupteurs 28, 30, 32. Les deux blocs photovoltaïques $P_{ai}$ et $P_{bi}$ et les deux capacités $C_{PVai}$ et $C_{PVbi}$ des condensateurs 64 correspondants, connectés entre les bornes des blocs photovoltaïques $P_{ai}$ et $P_{bi}$, sont considérés identiques ou proches. Les comportements du bloc photovoltaïque $P_{ai}$ avec la capacité $C_{PVai}$ et du bloc photovoltaïque $P_{bi}$ avec la capacité $C_{PVbi}$ sont donc considérés sensiblement identiques, avec des courants $I_{cai}$ et $I_{cbi}$ similaires, $I_{PVai}$ et $I_{PVbi}$ similaires et des tensions $V_{PVai}$ et $V_{PVbi}$ similaires. La tension continue élémentaire d'entrée $V_{PVi}$ est alors une combinaison linéaire des tensions $V_{PVai}$ et $V_{PVbi}$ aux bornes des deux blocs photovoltaïques 20, s'écrivant typiquement sous la forme $V_{PVi} = \alpha V_{PVai} + \beta V_{PVbi}$, avec $\alpha$ et $\beta$ représentant les coefficients de la combinaison linéaire. La combinaison linéaire des tensions $V_{PVai}$ et $V_{PVbi}$ est par exemple la valeur moyenne des tensions $V_{PVai}$ et $V_{PVbi}$ ($\alpha$ $\beta = \frac{1}{2}$), ou encore la valeur d'une des tensions $V_{PVai}$ et $V_{PVbi}$ des blocs photovoltaïques 20 ($\alpha = 1$ et $\beta = 0$) pour limiter le nombre de mesures, les deux tensions $V_{PVai}$ et $V_{PVbi}$ étant similaires.

Dans le cas d'une estimation de la capacité $C_{PVi}$ du condensateur 64, il est alors considéré que cette valeur estimée correspond à une pondération des deux capacités $C_{PVi} = \alpha C_{PVai} + \beta C_{PVbi}$, avec $\alpha$ et $\beta$ les coefficients précités de la combinaison linéaire des tensions $V_{PVai}$ et $V_{PVbi}$ pour déterminer la tension continue élémentaire d'entrée $V_{PVi}$. La valeur estimée de la capacité $C_{PVi}$ du condensateur 64 correspond alors typiquement à la valeur de l'une ou l'autre des deux capacités $C_{PVai}$ et $C_{PVbi}$ des condensateurs 64 correspondants, ou encore à une valeur moyenne des deux capacités $C_{PVai}$ et $C_{PVbi}$.

L'homme du métier notera qu'il est possible de court-circuiter un bloc photovoltaïque 20 pour ne plus l'utiliser, par exemple suite à une défaillance sur un bloc photovoltaïque 20 respectif. Dans l'exemple du premier agencement A1 de la figure 3, pour court-circuiter le bloc photovoltaïque $P_{ai}$ il faut fermer les interrupteurs K5 et K6 ; et pour court-circuiter le bloc photovoltaïque $P_{bi}$, il faut fermer les interrupteurs K6 et K7. Si un bloc photovoltaïque 20 est court-circuité, il est alors possible de continuer à fonctionner avec l'autre bloc photovoltaïque 20 selon l'exemple de réalisation de la figure 2, décrit précédemment, où chaque la source d'énergie 8 est formée d'un unique bloc photovoltaïque 20.

Le tableau 1 ci-dessous présente alors les principales configurations du premier agencement A1 de la figure 3, ainsi que la valeur correspondante du coefficient de connexion de chaque bloc photovoltaïque 20, noté alors $K_{PVi}$, au lieu de la notation $K_i$ utilisée dans le cas d'un unique bloc photovoltaïque 20. Ce coefficient de connexion $K_{PVi}$ fait le lien entre le courant continu élémentaire d'entrée $V_{PVi}$ entre le courant réseau $I_G$.

[Table 1]

| Configuration / état | Listes des interrupteurs fermés | $I_{PV_i}$ | $K_{PV_i}$ |
|---|---|---|---|
| Série+Polarité positive | K6 et K2, K3 | $I_G$ | 1 |
| Paralèlle+Polarité positive | K5, K7 et K2, K3 | $\dfrac{I_G}{2}$ | 1/2 |
| Bypass/contournement | K1, K3 ou K2, K4 | 0 | 0 |
| Tout ouvert | Configuration qui tend à faire chuter $I_G$ vers zéro | $-\lvert I_G \rvert$ | $\dfrac{-I_G}{\lvert I_G \rvert}$ |
| Paralèlle+Polarité négative | K5, K7 et K1, K4 | $-\dfrac{I_G}{2}$ | -1/2 |
| Série+Polarité négative | K6 et K1, K4 | $-I_G$ | -1 |

Dans l'exemple du deuxième agencement A2 de la figure 3, le module contient quatre blocs photovoltaïques 20, notés $P_{a1i}$, $P_{b1i}$, $P_{a2i}$ et $P_{b2i}$. Au sein de la première paire SG1, les blocs photovoltaïques $P_{a1i}$, $P_{b1i}$; et respectivement au sein de la deuxième paire SG2, les blocs photovoltaïques $P_{a2i}$ et $P_{b2i}$, sont configurables dynamiquement en série ou en parallèle, suivant l'état des premier, deuxième et troisième interrupteurs 28, 30, 32 respectifs. Les deux paires SG1, SG2 sont elles-mêmes configurables dynamiquement en série ou en parallèle, suivant l'état des premier, deuxième et troisième interrupteurs 28, 30, 32 respectifs interconnectant ces deux paires SG1, SG2, c'est-à-dire les interrupteurs $K_5$, $K_6$ et $K_7$. Enfin, la sortie du module de conversion 35 selon le deuxième agencement A2 est susceptible d'être en polarité positive, en polarité négative, en by-pass ou encore en tout ouvert, selon l'état des interrupteurs 38, c'est-à-dire des interrupteurs $K_1$, $K_2$, $K_3$ et $K_4$, du pont de commutation 58 dudit module de conversion. De manière analogue à ce qui a été décrit précédemment pour le premier agencement A1, les blocs photovoltaïques $P_{a1i}$, $P_{b1i}$, $P_{a2i}$ et $P_{b2i}$ et les capacités respectives $C_{PVa1i}$, $C_{PVb1i}$, $C_{PVa2i}$ et $C_{PVb2i}$ sont considérés identiques ou proches. Les comportements des blocs photovoltaïques avec leurs capacités respectives de condensateurs 64 sont donc considérés sensiblement identiques, avec des courants $I_{Ci}$ et $I_{PVi}$ similaires et des tensions $V_{PVi}$ similaires. Ainsi, la tension continue élémentaire d'entrée $V_{PVi}$ est mesurable sur l'un des quatre blocs photovoltaïques 20 (par exemple $V_{PVi} = V_{PV2ai}$), ou encore obtenue en effectuant la moyenne des tensions des quatre blocs photovoltaïques 20 pour une meilleure prise en compte d'éventuelles dispersions ($V_{PVi} = (V_{PV1ai} + V_{PV1bi} + V_{PV2ai} + V_{PV2bi})$ /4). Plus généralement, la tension continue élémentaire d'entrée $V_{PVi}$ est une combinaison linéaire quelconque des tensions individuelles des quatre blocs photovoltaïques 20, s'écrivant typiquement sous la forme $V_{PVi} = \alpha V_{PV1ai} + \beta V_{PV1bi} + \gamma V_{PV2ai} + \delta V_{PV2bi}$, avec $\alpha$, $\beta$, $\gamma$ et $\delta$ représentant les coefficients de la combinaison linéaire. En outre, si l'un des blocs photovoltaïques 20 est défaillant, il peut être contourné (by-pass), et sa tension est alors ignorée.

Dans le cas d'une estimation de la capacité $C_{PVi}$ du condensateur 64, il est alors considéré que cette valeur estimée correspond à une combinaison linéaire quelconque des capacités individuelles, s'écrivant typiquement sous la forme $C_{PVi} = \alpha C_{PV1ai} + \beta C_{PV1bi} + \gamma C_{PV2ai} + \delta C_{PV2bi}$, avec $\alpha$, $\beta$, $\gamma$ et $\delta$ représentant les coefficients de la combinaison linéaire, selon la pondération qui a été utilisée pour déterminer la capacité $C_{PVi}$.

L'homme du métier notera qu'il est possible de court-circuiter un bloc photovoltaïque 20 pour ne plus l'utiliser, par exemple suite à une défaillance sur un bloc photovoltaïque 20 respectif. Dans l'exemple du deuxième agencement A2, pour court-circuiter un bloc photovoltaïque 20, la fermeture de deux interrupteurs suffit ; par exemple en fermant $K_{15}$ et $K_{16}$ pour court-circuiter le bloc photovoltaïque $P_{a1i}$, ou encore en fermant $K_{16}$ et $K_{17}$ pour court-circuiter le bloc photovoltaïque $P_{a1b}$ ; et de manière similaire pour la seconde paire SG2. Les autres blocs photovoltaïques 20 restent utilisables.

Le tableau 2 ci-dessous présente alors les principales configurations du deuxième agencement A2 de la figure 3, ainsi que la valeur correspondante du coefficient de connexion de chaque bloc photovoltaïque 20, noté alors $K_{PVi}$, au lieu de la notation $K_i$ utilisée dans le cas d'un unique bloc photovoltaïque 20. Ce coefficient de connexion $K_{PVi}$ fait le lien entre le courant continu élémentaire d'entrée $V_{PVi}$ entre le courant réseau $I_G$.

[Table 2]

| Configuration / état | Listes des interrupteurs fermés | $I_{PVi}$ | $K_{PVi}$ |
|---|---|---|---|
| (SG1 série) série (SG2 série) et polarité + | K16, K6, K26 et K2, K3 | $I_G$ | 1 |
| (SG1 //) série (SG2 série) et polarité + alterné à 50% avec (SG1 série) série (SG2 //) et polarité + | K15, K17, K6, K26 et K2, K3 <br><br> K16, K6, K25, K27 et K2, K3 | $\dfrac{3\,I_G}{4}$ | 3/4 |
| (SG1 //) série (SG2 //) et polarité + | K15, K17, K6, K25, K27 et K2, K3 | $\dfrac{I_G}{2}$ | 1/2 |
| (SG1 série) // (SG2 série) et polarité + | K16, K5, K7, K26 et K2, K3 | $\dfrac{I_G}{2}$ | 1/2 |
| (SG1 //) // (SG2 //) et polarité + | K15, K17, K5, K7, K25, K27 et K2, K3 | $\dfrac{I_G}{4}$ | 1/4 |
| (SG1 //) // (SG2 série) ou (SG1 //) // (SG2 série) | Configurations interdites | | |
| Bypass/contournement | K1, K3 ou K2, K4 et config quelconque | 0 | 0 |
| Tout ouvert | Configuration qui tend à faire chuter $I_G$ vers zéro | $-|I_G|$ | $\dfrac{-I_G}{|I_G|}$ |
| (SG1 //) // (SG2 //) et polarité - | K15, K17, K5, K7, K25, K27 et K1, K4 | $-\dfrac{I_G}{4}$ | -1/4 |
| (SG1 série) // (SG2 série) et polarité - | K16, K5, K7, K26 et K1, K4 | $-\dfrac{I_G}{2}$ | -1/2 |
| (SG1 //) série (SG2 //) et polarité - | K15, K17, K6, K25, K27 et K1, K4 | $-\dfrac{I_G}{2}$ | -1/2 |
| (SG1 //) série (SG2 série) et polarité alterné à 50% avec (SG1 série) série (SG2 //) et polarité - | K15, K17, K6, K26 et K1, K4 <br><br> K16, K6, K25, K27 et K1, K4 | $-\dfrac{3\,I_G}{4}$ | -3/4 |
| (SG1 série) série (SG2 série) et polarité - | K16, K6, K26 et K1, K4 | $-I_G$ | -1 |
| (SG1) série (SG2 série) et polarité + | K15, K16, K6, K26 et K2, K3 | $I_G$ | 1 |
| (SG1) série (SG2 //) et polarité + alterné à 50% avec (SG1 isolé) // (SG2 série) et polarité + | K15, K16, K6, K25, K27 et K2, K3 <br><br> K15, K16, K7, K26 et K2, K3 | $\dfrac{I_G}{2}$ | 1/2 |
| (SG1) // (SG2 //) et polarité + | K15, K16, K5, K7, K25, K27 et K2, K3 | $\dfrac{I_G}{3}$ | 1/3 |
| Bypass/contournement | K1, K3 ou K2, K4 et config quelconque | 0 | 0 |

(suite)

| Configuration / état | Listes des interrupteurs fermés | $I_{PV_i}$ | $K_{PV_i}$ |
|---|---|---|---|
| (SG1) // (SG2 //) et polarité - | K15, K16, K5, K7, K25, K27 et K1, K4 | $-\dfrac{I_G}{3}$ | -1/3 |
| (SG1) série (SG2 //) et polarité - alterné à 50% avec (SG1 isolé) // (SG2 série) et polarité - | K15, K16, K6, K25, K27 et K1, K4<br><br>K15, K16, K7, K26 et K1, K4 | $-\dfrac{I_G}{2}$ | -1/2 |
| (SG1) série (SG2 série) et polarité- | K15, K16, K6, K26 et K1, K4 | $-I_G$ | -1 |

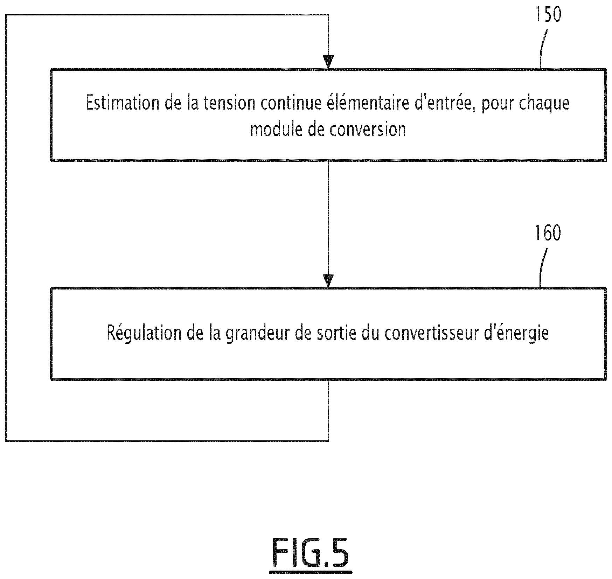

Le fonctionnement du dispositif électronique de pilotage 15, et en particulier du contrôleur principal 50, selon l'invention va être à présent décrit en regard de la figure 5 représentant un organigramme du procédé de pilotage du convertisseur d'énergie électrique 10 selon l'invention, le procédé de pilotage étant mis en oeuvre par un contrôleur principal 50.

Lors d'une étape initiale 100, le contrôleur principal 50 calcule, via son premier estimateur 80 et pour chaque module de conversion 35, une valeur estimée $\widehat{V_{PV_i}}(t_k)$ de la tension continue élémentaire d'entrée $V_{PVi}$ à partir d'une valeur précédemment mesurée $V_{PVi}(t_{k-p})$ de la tension continue élémentaire d'entrée $V_{PVi}$.

La valeur estimée $\widehat{V_{PV_i}}(t_k)$ de la tension continue élémentaire d'entrée $V_{PVi}$ est par exemple calculée selon l'équation (1) précédente.

En complément facultatif, lors de cette étape initiale 100, le contrôleur principal 50 calcule également, via son deuxième estimateur 85 et pour chaque module de conversion 35, la moyenne estimée $<I_{PVi}>$ du courant élémentaire d'entrée $I_{PVi}$. Ladite moyenne estimée $<I_{PVi}>$ est alors utilisée pour calculer la valeur estimée $\widehat{V_{PV_i}}(t_k)$ de la tension continue élémentaire d'entrée $V_{PVi}$, et évite alors l'ajout d'un capteur de courant pour chaque module de conversion 35 respectif.

Ladite moyenne estimée $<I_{PVi}>$ est par exemple calculée selon l'équation (4) précédente.

En complément facultatif additionnel, lors de cette étape initiale 100, le contrôleur principal 50 estime également, via son troisième estimateur 90 et pour chaque module de conversion 35, une valeur courante de la capacité $C_{PVi}$ du condensateur 64. Ce complément facultatif additionnel permet d'améliorer encore l'estimation de la tension continue élémentaire d'entrée $V_{PVi}$.

Le troisième estimateur 90 estime typiquement la valeur courante de la capacité $C_{PVi}$ du condensateur 64 en corrigeant une précédente valeur estimée de la capacité $C_{PVi}$ du condensateur 64 en fonction, d'une part, du signe de la différence entre une valeur d'un courant de pont $I_{Hi}$ reçu par le pont de commutation 58 et une valeur d'un courant élémentaire d'entrée $I_{PVi}$ reçu par le module de conversion 35, dit premier signe ; et d'autre part, du signe de la différence entre la valeur estimée $\widehat{V_{PV_i}}(t_k)$ de la tension continue élémentaire d'entrée $V_{PVi}$ et la valeur postérieurement mesurée $V_{PVi}(t_{k+l})$ de la tension continue élémentaire d'entrée $V_{PVi}$, dit deuxième signe ; la valeur estimée initiale de la capacité $C_{PVi}$ du condensateur 64 étant prédéfinie.

A l'issue de cette étape 100 d'estimation de la tension continue élémentaire d'entrée $V_{PVi}$, le contrôleur principal 50 effectue, lors d'une étape suivante 110 et via son unité de régulation REG, la régulation de la grandeur de sortie $I_S$, $V_S$ du convertisseur d'énergie 10 en envoyant des ordres de commande aux contrôleurs élémentaires 40. La régulation est effectuée en fonction d'ensembles de grandeur(s) élémentaire(s), chaque ensemble de grandeur(s) élémentaire(s) étant associé à un module de conversion 35 respectif. L'ensemble de grandeur(s) élémentaire(s) comporte notamment la tension continue élémentaire d'entrée $V_{PVi}$, et la valeur de la tension continue élémentaire d'entrée $V_{PVi}$ prise en compte pour cette régulation est alors une valeur mesurée par le contrôleur élémentaire 40 lorsqu'elle vient d'être mesurée, et sinon la valeur estimée $\widehat{V_{PV_i}}(t_k)$ calculée par le premier estimateur 80.

Aux fins de cette étape de régulation 110, chaque contrôleur élémentaire 40 mesure régulièrement des valeurs de l'ensemble de grandeurs élémentaires pour le module de conversion 35 respectif auquel il est associé, puis les transmet au contrôleur principal 50, comme décrit précédemment en regard de la figure 4.

Le procédé de pilotage est alors réitéré en retournant à l'étape d'estimation 100 à l'issue de l'étape de régulation 110, le procédé de pilotage étant mis en oeuvre de manière périodique, typiquement à la fréquence de boucle $f_B$, par exemple de l'ordre de 20 kHz.

Comme décrit précédemment, l'unité de régulation REG prend en entrée les données des blocs photovoltaïques 20 ($V_{PV}$ et $V_{opt}$ de chaque bloc photovoltaïque 20) ainsi que les données réseaux ($V_G$ et $I_G$) pour déterminer les ordres de commandes. Afin de réguler correctement les grandeurs en entrée (tensions $V_{PVi}$ des blocs photovoltaïques 20) et en sortie (courant réseau $I_G$), il est préférable de choisir la fréquence de boucle $f_B$ avec une valeur bien supérieure à la fréquence $f_G$ du réseau électrique 6, soit $f_B \gg f_G$. Par ailleurs, l'augmentation de cette fréquence permet une diminution de la taille du filtre de sortie 16, ainsi qu'une meilleure régulation des grandeurs (Taux de Distorsion Harmonique, facteur de puissance). La valeur choisie pour la fréquence de boucle $f_B$ est par exemple de l'ordre de 20 kHz, ce qui permet de comparer le pilotage du convertisseur 10 selon l'invention avec celui des onduleurs du commerce tout en ayant de très bonnes performances (régulation et taille du filtre). La gestion des données est résumée dans le tableau 3 ci-dessous. Les mesures des tension et courant réseau ($V_G$ et $I_G$) ne posent pas de contraintes sur le bus de communication 52, car elles sont mesurées en temps réel directement par le contrôleur principal 50, la fréquence d'acquisition ne dépend que des capacités du contrôleur principal 50. Les tensions optimales $V_{opt\_i}$ (calculées par exemple via la mise en oeuvre de l'algorithme MPPT) évoluent lentement en fonction de l'ensoleillement et de la température. Il est donc possible de remonter ces informations à faible fréquence, soit $f_{MPPT} \ll f_B$, où $f_{MPPT}$ représente la fréquence de calcul selon l'algorithme MPPT.

Par contre, les tensions continues élémentaires d'entrée $V_{PVi}$ doivent avantageusement être envoyées en temps réel au contrôleur principal 50 afin de permettre une bonne régulation de ces grandeurs. Cependant, les contraintes du bus de communication 52 limitent la fréquence de rafraîchissement $f_D$ de ces données.

[Table 3]

| Données | Fréquence de rafraîchissement | Type d'acquisition |
|---|---|---|
| $I_G$ | $f_B$ | Mesure directe par le contrôleur principal 50 |
| $V_G$ | $f_B$ | Mesure directe par le contrôleur principal 50 |
| $V_{opt_1}, V_{opt_2}, \dots, V_{opt_n}$ | $f_{MPPT}$ | Bus de communication 52 |
| $V_{PV_1}, V_{PV_2}, \dots, V_{PV_n}$ | $f_D$ | Bus de communication 52 |

A titre d'exemple pour le bus de communication 52, la couche physique RS-485 offre un débit limité à 4 Mbit/s. Cette limite provient de la distance parcourue par les signaux dans les câbles entre le contrôleur principal 50 et le contrôleur élémentaire 40 le plus éloigné. Avec un tel débit, la fréquence de rafraîchissement $f_D$ des données est fournie par l'équation suivante :

[5]

$$f_D = N * \left( (n_{bits} + n_{CRC}) * \frac{1}{D_{UART}} + t_{DT} \right)$$

où $f_D$ représente la fréquence de rafraîchissement des données, (exprimée en Hz) ;
$n_{bits}$ représente le nombre de bits transférés en incluant les bits de Start et de Stop, exprimé en bits ;
$n_{CRC}$ représente le nombre de bit de la trame CRC (de l'anglais *Cyclic Redundancy Check*), exprimé en bits ;
$D_{UART}$ représente le débit du bus de communication 52, exprimé en Mbit/s ; et
$t_{DT}$ représente le temps d'attente entre deux trames sur le bus de communication 52, exprimé en μs. Ce temps d'attente permet d'éviter les collisions sur le bus de communication 52 qui conduiraient à une mise en défaut.

A titre d'exemple, les valeurs choisies pour les paramètres précités du bus de communication 52 sont résumées dans le tableau 4 ci-dessous. Avec ces paramètres précisés, la fréquence de rafraîchissement $f_D$ est limitée à 2,5 kHz, soit environ le dixième de la fréquence de fonctionnement désirée, la fréquence de boucle $f_B$ étant de l'ordre de 20 kHz.

[Table 4]

| Données | Détails | Valeur |
|---|---|---|
| N | Nombre de modules | 13 |
| $n_{bits}$ | Nombre de bits de données | 20 (dont 4 bits de Start/Stop) |
| $n_{CRC}$ | Nombre de bits du CRC | 10 (dont 2 bits de Start/Stop) |
| $D_{UART}$ | Débit UART | 4 Mbit/s |
| $t_{DT}$ | Temps d'attente entre 2 trames | 25 ps |
| $f_D$ | Fréquence de rafraîchissement | 2.5 kHz |

Par ailleurs, étant donné que la fréquence de rafraîchissement $f_D$ est inversement proportionnelle au nombre N de modules de conversion 35, une augmentation dudit nombre N de modules de conversion 35 tend à creuser encore plus l'écart entre la fréquence de rafraîchissement $f_D$ et la fréquence de boucle $f_B$.

Le premier estimateur 80 permet alors de remédier à cette limitation, en calculant à la fréquence de boucle $f_B$ la valeur estimée $\widehat{V_{PV_i}}(t_k)$ de la tension continue élémentaire d'entrée $V_{PVi}$, pendant que les valeurs mesurées de la tension continue élémentaire d'entrée $V_{PVi}$ sont transmises au contrôleur principal à la fréquence de rafraîchissement $f_D$.

L'homme du métier comprendra ainsi que, lorsque la fréquence de rafraîchissement $f_D$ est environ le dixième de fréquence de boucle $f_B$, la régulation de la grandeur de sortie $I_S$, $V_S$ du convertisseur d'énergie 10 est alors effectuée environ 1 fois sur 10 avec une valeur mesurée de la tension continue élémentaire d'entrée $V_{PVi}$ et donc environ 9 fois sur 10 avec la valeur estimée $\widehat{V_{PV_i}}(t_k)$ de la tension continue élémentaire d'entrée $V_{PVi}$, calculée par le premier estimateur 80.

Ainsi, le dispositif de pilotage 15 selon l'invention permet de faire fonctionner le système de conversion 5 à la fréquence de fonctionnement $f_B$ supérieure à la fréquence de rafraîchissement $f_D$ sans pour autant réduire la stabilité et la précision sur la régulation des grandeurs $V_{PVi}$ et $I_G$.

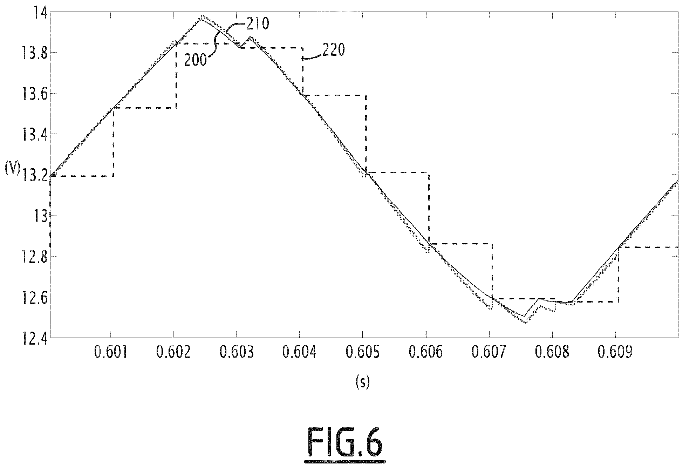

Les résultats obtenus avec le dispositif de pilotage 15 selon l'invention sont alors illustrés sur les figures 6 à 8.

La figure 6 présente la tension réelle instantanée du bloc photovoltaïque 20 via la courbe 200 en trait continu. Il s'agit d'une tension continue, de valeur moyenne égale à 13,2 V, avec une ondulation naturelle continue à 100 Hz (4% d'ondulation). La courbe 210 en points représente la tension estimée $\widehat{V_{PV_i}}$ calculée par le premier estimateur 80. La courbe 220 en trait pointillé représente la tension récupérée par le contrôleur principal 50 à travers le bus de communication 52. Cette mise à jour s'effectue à la fréquence de rafraîchissement $f_D$, et entre deux mises à jour, faute d'information, la tension est supposée constante. Cette courbe 220 montre clairement le manque d'informations dont dispose le contrôleur principal 50 pour effectuer son algorithme de régulation. La forme d'onde de la courbe 210 reflète donc, bien mieux que la courbe 220, la tension réelle selon la courbe 200. Cela permet d'améliorer grandement la régulation de la tension des blocs photovoltaïques 20.

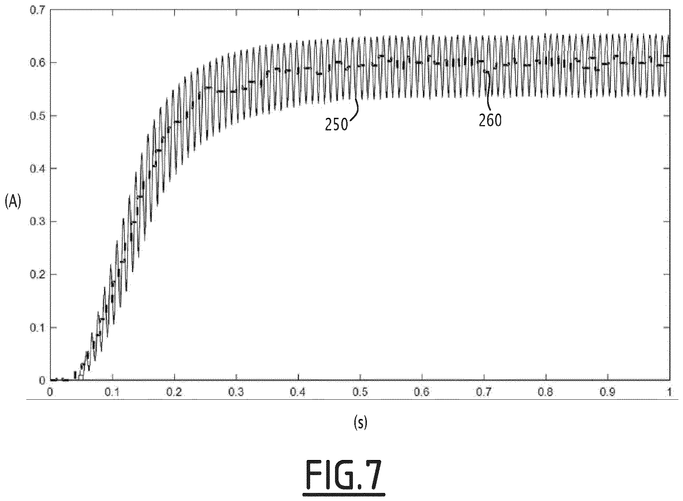

La figure 7 présente l'évolution du courant d'un module de conversion 35 au démarrage (courbe 250 en trait continu), ainsi que la valeur moyenne de courant construite à l'aide du deuxième estimateur 85 (courbe 260 en pointillé). Autrement dit, la courbe 250 correspond à la valeur réelle du courant élémentaire d'entrée $I_{PVi}$, et la courbe 260 correspond à la moyenne estimée du courant élémentaire d'entrée $I_{PVi}$. La figure 7 montre alors la capacité du deuxième estimateur 85 à récupérer rapidement l'information (avec une période réseau de retard) et à se stabiliser en régime permanent. Cette information, obtenue simplement par calcul et sans mesure, est donc exploitable pour le calcul de la valeur estimée $\widehat{V_{PV_i}}(t_k)$ de la tension continue élémentaire d'entrée $V_{PVi}$ via le premier estimateur 80.

La figure 8 présente en trait continu une courbe 300 représentant la tension réelle d'un bloc photovoltaïque 20 sur une période réseau. Ici, la valeur réelle de la capacité $C_{PVi}$ du condensateur 64 est inférieure de 20% à la valeur prise en compte dans l'équation (1). En trait pointillé, en partie supérieure de la figure 8, une courbe 310 représente la

valeur estimée $\widehat{V_{PV_i}}(t_k)$ de la tension continue élémentaire d'entrée $V_{PVi}$ en utilisant une valeur prédéfinie de la capacité $C_{PVi}$ du condensateur 64, telle que la valeur fournie par le fabricant dudit condensateur 64, c'est-à-dire sans prendre en compte la valeur estimée $\widehat{C_{PV_i}}$ de la capacité $C_{PVi}$ du condensateur 64 calculée par le troisième estimateur 90. La courbe 310 montre alors quelques erreurs d'estimation de la tension de la tension continue élémentaire d'entrée $V_{PVi}$ par rapport à la courbe 300 représentant la tension réelle. En trait pointillé, en partie inférieure de la figure 8, une courbe 320 représente la valeur estimée $\widehat{V_{PV_i}}(t_k)$ de la tension continue élémentaire d'entrée $V_{PVi}$ en utilisant la valeur estimée $\widehat{C_{PV_i}}$ de la capacité $C_{PVi}$ du condensateur 64 calculée par le troisième estimateur 90. La courbe 320 obtenue en utilisant à la fois le premier estimateur 80 et le troisième estimateur 90 est alors beaucoup plus proche de la courbe 300 représentant la tension réelle, que ne l'était la courbe 310, obtenue sans mettre en oeuvre le troisième estimateur 90.

L'homme du métier observera alors que le troisième estimateur 90 permet d'améliorer encore l'estimation de la tension continue élémentaire d'entrée $V_{PVi}$, en réduisant les erreurs d'estimation, comme cela ressort de la comparaison des courbes 310 et 320.

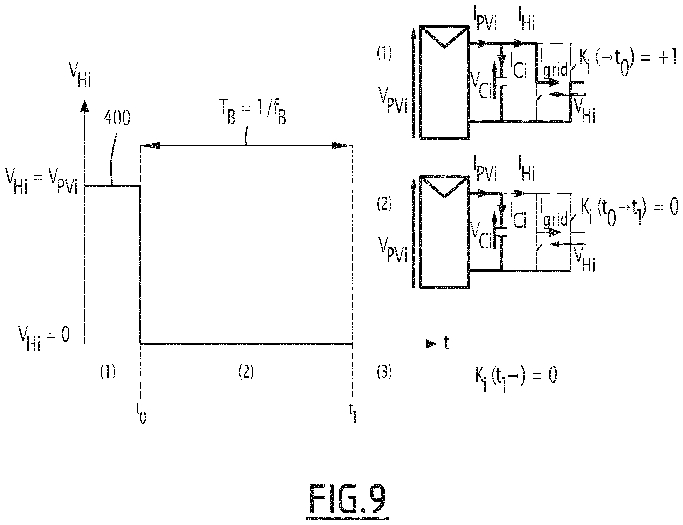

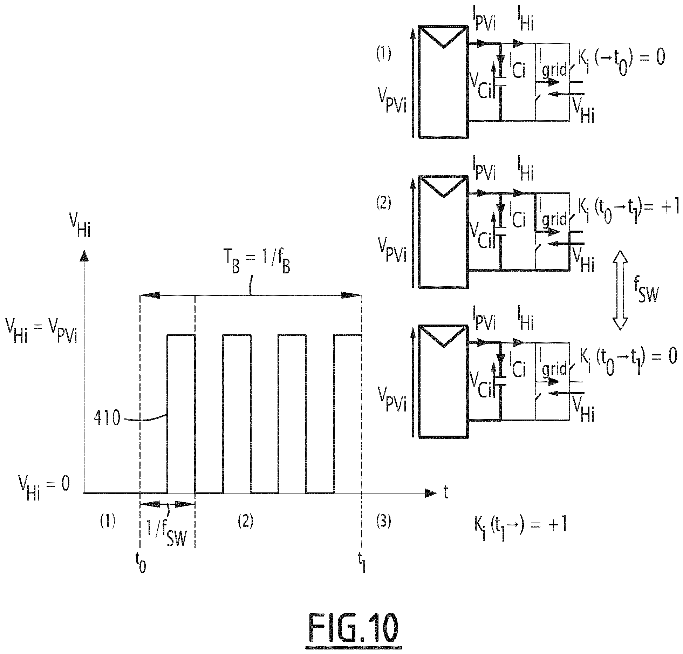

Selon un aspect complémentaire, les figures 9 et 10 illustrent le cas où la fréquence de boucle $f_B$ est différente de la fréquence de commutation $f_{sw}$ des interrupteurs 38 du module de conversion 35.

Les calculs de la boucle de régulation sont effectués par l'unité de régulation REG à la fréquence de boucle $f_B$. Cette boucle de régulation envoie à chaque période de régulation $T_B$, avec $T_B = 1/f_B$, des ordres de changement d'état à au plus la moitié des modules de conversion 35, ou à six modules de conversion 35 au maximum si le nombre de module de conversion 35 est inférieur à 12, de sorte à limiter le nombre de commutations (pour limiter les pertes) et limiter le nombre d'ordres à envoyer (pour ne pas saturer le bus de communication 52).

Avantageusement, le nombre de modules de conversion 35 qui reçoivent un ordre de changement d'état à chaque période de régulation $T_B$ est inférieur au quart des modules de conversion 35, ou inférieur à 4 modules de conversion 35.

Dans un cas optimal, seul deux modules de conversion 35 maximum reçoivent un ordre de changement d'état à chaque période de régulation $T_B$. C'est le cas décrit ci-après.

A chaque période de régulation $T_B$, soit aucun ordre n'est envoyé (maintien de l'état précédent), soit un seul ordre est envoyé à un seul module de conversion 35, soit deux ordres sont envoyés à deux modules de conversion 35 différents ; soit par exemple :

- un ordre de connexion du module *i* (un seul ordre)
- un ordre de déconnexion du module *j* (un seul ordre)
- un ordre de connexion du module *i* et un ordre de déconnexion *j* (deux ordres)

Le contrôleur central 50 connaît, en temps réel, l'état de connexion de chaque module de conversion 35. Il ne peut donc envoyer un ordre de connexion qu'à un module de conversion 35 étant déconnecté, et un ordre de déconnexion qu'à un module de conversion 35 étant connecté.

Pour le module *i* devant exécuter un ordre, le contrôleur central 50 envoie une donnée $K_{M_i}$ telle que :

[6]

$$-1 < K_{M_i} < 1$$

La figure 9 illustre alors le cas d'un ordre de déconnexion, et la courbe 400 représente la tension élémentaire de sortie $V_{Hi}$, c'est-à-dire la tension en sortie du pont de commutation 58, lors de l'exécution de cet ordre de déconnexion.

Lorsque $K_{M_i}(t_0) = 0$, le module *i* vient directement mettre le pont de commutation 58 en mode bypass :

[7]

$$K_i(t_0 \rightarrow t_0 + T_{boucle}) = 0$$

La tension de sortie $V_{H_i}(t)$ du module de conversion 35 sur la période $[t_0 \rightarrow t_0 + T_B]$ est donc :

[8]

$$V_{H_i}(t_0 \rightarrow t_0 + T_B) = V_{PV_i}(t) * K_i(t_0 \rightarrow t_0 + T_B) = 0$$

Une fois la période de régulation $[t_0 \rightarrow t_0 + T_B]$ terminée, le module $i$ attend de recevoir un nouvel ordre de la part du contrôleur central 50 pour changer de nouveau d'état (cela peut durer une à plusieurs périodes de régulation $T_B$).

Sur la figure 9, la séquence d'un ordre de déconnexion est alors la suivante.

Pour t<$t_0$, le module de conversion 35 est connecté :

[9]

$$V_{H_i}(\rightarrow t_0) = V_{PV_i}$$

A $t = t_0$, le module $i$ reçoit l'ordre $K_{M_i} = 0$. Le module de conversion 35 se met directement en mode bypass :

[10]

$$V_{H_i}(t_0 \rightarrow t_1) = V_{H_i}(t_0 \rightarrow t_0 + T_B) = 0$$

A $t = t_1$, si le module de conversion 35 reçoit un nouvel ordre $K_{M_i}$ il l'exécute. Sinon, il maintient son état actuel jusqu'à l'arrivé d'un nouvel ordre :

[11]

$$V_{H_i}(t_1 \rightarrow) = 0$$

La figure 10 illustre alors le cas d'un ordre de connexion, et la courbe 410 représente la tension élémentaire de sortie $V_{Hi}$, c'est-à-dire la tension en sortie du pont de commutation 58, lors de l'exécution de cet ordre de connexion.

Lorsque $K_{M_j}(t_0) \neq 0$, le module $j$ va commuter le pont de commutation 58 à la fréquence de commutation $f_{sw}$ (un multiple entier de la fréquence de boucle $f_B$) afin d'obtenir :

[12]

$$K_{M_j}(t_0) = \frac{1}{T_B} \int_{t_0}^{t_0+T_B} K_j(t). \, dt$$

Lorsque $K_{M_j}(t_0) > 0$, la commutation du pont de commutation 58 du module $j$ à la fréquence de commutation $f_{sw}$ respecte :

[13]

$$K_j(t_0 \rightarrow t_0 + T_B) \geq 0$$

La tension de sortie du module de conversion 35 sur la période $[t_0 \rightarrow t_0 + T_B]$ est donc :

[14]

$$V_{H_i}(t_0 \rightarrow t_0 + T_B) = V_{PV_i}(t) * K_i(t_0 \rightarrow t_0 + T_B) \geq 0$$

Lorsque $K_{M_j}(t_0) < 0$, la commutation du pont de commutation 58 du module $j$ à la fréquence de commutation $f_{sw}$ respecte :

[15]

$$K_j(t_0 \rightarrow t_0 + T_B) \leq 0$$

La tension de sortie du module de conversion 35 sur la période $[t_0 \rightarrow t_0 + T_B]$ est donc :

[16]

$$V_{H_i}(t_0 \rightarrow t_0 + T_B) = V_{PV_i}(t) * K_i(t_0 \rightarrow t_0 + T_B) \leq 0$$

Sur la figure 10, la séquence d'un ordre de connexion est alors la suivante. Pour $t < t_0$, le module de conversion 35 est déconnecté :

[17]

$$V_{H_i}(\rightarrow t_0) = 0$$

A $t = t_0$, le module $i$ reçoit l'ordre $K_{M_i}$ = +0,5. Le module de conversion 35 va alors commuter durant la période $[t_0 \rightarrow t_0 + T_B]$ à la fréquence de commutation $f_{sw}$ (ici $f_{sw}$ = 4* $f_B$) avec un rapport cyclique de 0,5, afin de respecter la condition :

[18]

$$K_{M_i}(t_0) = 0{,}5 = \frac{1}{T_B} \int_{t_0}^{t_0 + T_B} K_i(t).\, dt$$

A $t = t_1$, si le module de conversion 35 reçoit un nouvel ordre $K_{M_i}$ il l'exécute. Sinon, il maintient son état actuel jusqu'à l'arrivée d'un nouvel ordre : $V_{H_i}(t_1 \rightarrow) = V_{PV_i}$.

L'état final est un état statique, c'est-à-dire une configuration qui est maintenue (applicable aussi au cas de modules de conversion 35 commutables en série/parallèle selon l'exemple de la figure 3), cette configuration est maintenue jusqu'à réception d'un nouvel ordre. Cette configuration finale (à t1+) est différente de la configuration initiale (à t0-), dans une configuration statique qui donne une valeur de K proche de $K_{M_j}(t_0)$. Les valeurs statiques de K des configurations initiale et finale encadrent typiquement la valeur $K_{M_j}(t_0)$.

Ainsi, seul les modules de conversion 35 recevant un ordre, ici 2 modules de conversion 35 au maximum, peuvent présenter des commutations à la fréquence de commutation $f_{sw}$, pour une durée $T_B$, tous les autres modules de conversion 35 restant dans l'état statique. Bien sûr, un module de conversion 35 peut recevoir plusieurs ordres d'affilée, et commuter sur plusieurs périodes $T_B$, mais il n'y aura ici malgré tout au plus deux modules de conversion 35 qui présenteront des commutations à la fréquence de commutation $f_{sw}$ en même temps.

Pour un ordre de connexion tel que $K_{M_i} < 0$, le raisonnement est analogue, à la différence que lorsque le module de conversion 35 commute ($K_i(t) \neq 0$) la tension est négative : $V_{H_i}(t) = -V_{PV_i}(t)$.

La fréquence de commutation $f_{sw}$ est un multiple entier de la fréquence de boucle $f_B$, le multiple étant supérieur ou égal à 1. L'augmentation de la fréquence de commutation $f_{sw}$ permet de diminuer la taille des composants passifs du filtre de sortie 16. Par ailleurs, l'augmentation de la fréquence de boucle $f_B$ permet d'améliorer la précision (limiter l'erreur de suivi, le dépassement, les oscillations, ...) de la régulation des grandeurs du système : les tensions continues élémentaires d'entrée $V_{PVi}$ et le courant de sortie $I_S$, correspondant au courant de réseau $I_G$. Ainsi, il est tout de même préférable de conserver une fréquence de boucle $f_B$ grande devant la fréquence $f_G$ du réseau électrique 6 (au moins >10 fois), avec par exemple la fréquence de boucle $f_B$ de l'ordre de 20 kHz.

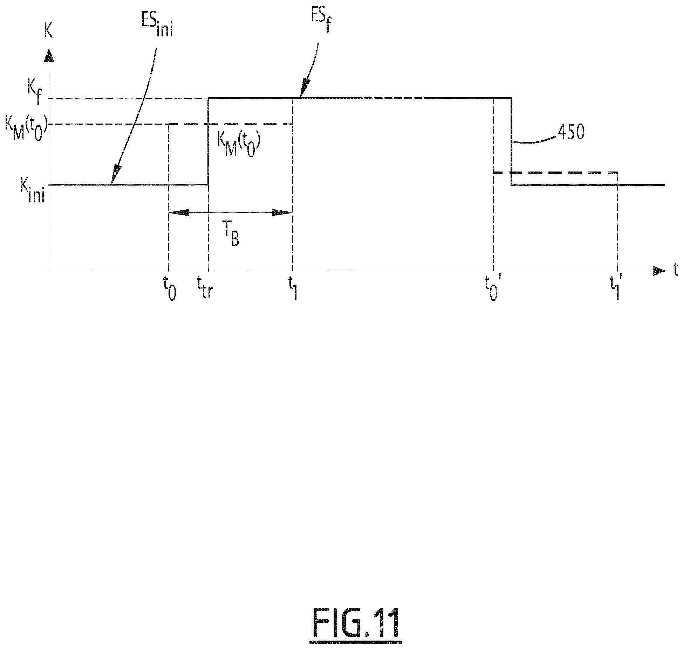

La figure 11 illustre ensuite le cas où la fréquence de boucle $f_B$ est sensiblement égale à la fréquence de commutation $f_{sw}$ des interrupteurs 38 du module de conversion 35. La courbe 450 représente l'évolution du coefficient de connexion K en fonction du temps t.

Même si la fréquence de commutation $f_{sw}$ est sensiblement égale à la fréquence de boucle $f_B$, il est possible d'appliquer un $K_{Mj}(t_0)$ différent d'un état statique.

Dans l'exemple de la figure 3 avec configurations série/parallèle, en prenant par exemple un $K_{initial}$ égal à +1/2 (configuration initiale « Paralèlle+Polarité positive »), un $K_{final}$ égal à +1 (configuration finale « Série+Polarité positive ») et un $K_{Mj}(t_0)$ égal à 0,85, le module de conversion 35 doit donc passer de l'état initial à l'état final durant la période $T_B$ qui va de t0 à t1, pour obtenir le $K_{Mj}(t_0)$ souhaité durant cette période, l'instant de transition de l'état initial à l'état final est déterminé tel que la valeur moyenne de K sur cette période vaut $K_{Mj}(t_0)$.

Le principe est donc similaire au cas où la fréquence de commutation $f_{sw}$ est supérieure à la fréquence de boucle $f_B$. On passe d'un état statique initial $ES_{ini}$ à un état statique final ESf différent de l'état statique initial $ES_{ini}$, tout en assurant une certaine valeur moyenne du coefficient de connexion K sur cette période $T_B$ de transition. Enfin, l'état final est maintenu tant que le module de conversion 35 ne reçoit pas de nouvel ordre.

Ainsi, en limitant le nombre de modules de conversion 35 recevant un ordre à chaque période $T_B$, le nombre de commutations est limité, et par conséquent également la quantité d'ordre à envoyer sur le bus de communication 52.

Dans les exemples des figures 1 à 8, la fréquence de boucle $f_B$ et la fréquence de commutation $f_{sw}$ des interrupteurs 38 sont de préférence supposées similaires, c'est-à-dire de valeurs sensiblement égales, telle que de valeur de l'ordre de 20 kHz.

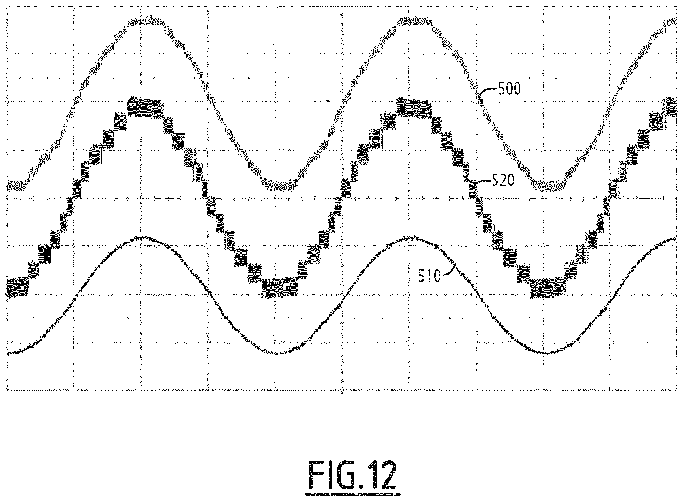

Enfin, la figure 12 montre les résultats expérimentaux obtenus à l'aide d'un prototype comportant six modules de conversion 35 et fonctionnant à 20 kHz. Chaque module de conversion 35 est connecté à un bloc photovoltaïque 20 (tel qu'un panneau solaire) de 50 W, et la puissance totale de sortie est de 300 W. Le convertisseur 10 est connecté au réseau électrique 6 dont la tension est abaissée (à l'aide d'un autotransformateur non représenté) jusqu'à une valeur de l'ordre de 90 V. Sur la figure 12, la courbe 500 correspond à la tension $V_G$ du réseau électrique 6, la courbe 510 correspond au courant $I_G$ du réseau électrique 6, et la courbe 520 correspond à la tension $V_S$ en sortie du convertisseur 10.

Les courbes 500, 510, 520 sont données en régime permanent. La figure 12 montre alors que le convertisseur 10 parvient parfaitement à produire un courant de sortie $I_G$ sinusoïdal, en phase avec la tension $V_G$ du réseau électrique 6 avec une très bonne dynamique de régulation (faible Taux de Distorsion Harmonique et facteur de puissance unitaire), et ce avec une fréquence de fonctionnement à 20 kHz, tout en stabilisant chaque module de conversion 35 autour de son point de puissance maximale. Les oscillations sur le courant de sortie $I_G$ et sur les tensions des blocs photovoltaïques 20 correspondent parfaitement à celles attendues par les calculs de dimensionnement des éléments passifs. Grâce au dispositif de pilotage 15 selon l'invention, les contraintes du bus de communication 52 n'ont donc aucun impact sur le fonctionnement du système de conversion 5.

On conçoit ainsi que le dispositif 15 de pilotage du convertisseur 10 d'énergie multi-niveaux selon l'invention permet un pilotage à haute fréquence, typiquement supérieure à 20kHz, dudit convertisseur 10 pouvant en outre être connecté à un grand nombre de sources d'énergie 8, par exemple à plus de dix sources d'énergie 8, tout en limitant le débit du bus de données 52 et réduisant la complexité du dispositif de pilotage 15, ainsi que la taille et le volume des éléments de filtrage en sortie, tel que le filtre 16.

**Revendications**

1. Dispositif électronique (15) de pilotage d'un convertisseur d'énergie électrique (10), le convertisseur d'énergie (10) étant apte à délivrer une tension totale de sortie ($V_S$) et/ou un courant de sortie ($I_G$) à partir d'une pluralité de tensions continues d'entrée ($V_{PV1}$, $V_{PV2}$, ..., $V_{PVN}$), dites tensions continues élémentaires d'entrée ($V_{PV1}$, $V_{PV2}$, ..., $V_{PVN}$), chacune étant issue d'une source d'énergie (8) respective ; le convertisseur d'énergie (10) comprenant plusieurs modules de conversion d'énergie (35), chacun étant apte à recevoir en entrée une tension continue élémentaire d'entrée ($V_{PVi}$) de la part d'une source d'énergie (8) respective et à délivrer en sortie une tension élémentaire de sortie ($V_{Hi}$) ; les modules de conversion (35) étant connectés en série par leurs sorties et la tension totale de sortie ($V_S$) étant égale à la somme des tensions élémentaires de sortie ($V_{H1}$, $V_{H2}$, ... , $V_{HN}$) ; chaque module de conversion (35) comportant plusieurs interrupteurs (38) pour convertir la tension continue élémentaire d'entrée ($V_{PVi}$) respective en la tension élémentaire de sortie ($V_{Hi}$) respective,

le dispositif électronique de pilotage (15) comprenant plusieurs contrôleurs élémentaires (40) et un contrôleur principal (50) connecté à chacun des contrôleurs élémentaires (40), chaque contrôleur élémentaire (40) étant associé à un module de conversion (35) respectif et configuré pour commander les interrupteurs (38) dudit module de conversion (35),

le contrôleur principal (50) étant configuré pour effectuer une régulation d'une grandeur de sortie ($V_S$ ; $I_S$) du convertisseur d'énergie (10) en envoyant des ordres de commande aux contrôleurs élémentaires (40), la régulation étant effectuée en fonction d'ensembles de grandeur(s) élémentaire(s), chaque ensemble de grandeur(s) élémentaire(s) étant associé à un module de conversion (35) respectif,

chaque contrôleur élémentaire (40) étant configuré pour mesurer régulièrement des valeurs de l'ensemble de grandeur(s) élémentaire(s) pour le module de conversion (35) respectif auquel il est associé, puis pour les transmettre au contrôleur principal (50), l'ensemble de grandeur(s) élémentaire(s) comportant la tension continue élémentaire d'entrée ($V_{PVi}$),

**caractérisé en ce que** le contrôleur principal (50) comporte un premier estimateur (80) configuré pour calculer, pour chaque module de conversion (35), une valeur estimée $(\widehat{V_{PV_i}}(t_k))$ de la tension continue élémentaire d'entrée ($V_{PVi}$) à partir d'une valeur précédemment mesurée ($V_{PVi}(t_{k-p})$) de la tension continue élémentaire d'entrée ($V_{PVi}$), et

**en ce que** le contrôleur principal (50) comporte en outre un deuxième estimateur (85) configuré pour calculer, pour chaque module de conversion (35), une moyenne estimée ($<I_{PVi}>$) du courant élémentaire d'entrée ($I_{PVi}$) reçu par le module de conversion (35), la moyenne estimée ($<I_{PVi}>$) du courant élémentaire d'entrée ($I_{PVi}$) étant alors utilisée pour calculer la valeur estimée $(\widehat{V_{PV_i}}(t_k))$ de la tension continue élémentaire d'entrée ($V_{PVi}$).

2. Dispositif (15) selon la revendication 1, dans lequel chaque module de conversion (35) comprend deux bornes d'entrée (54), deux bornes de sortie (56), un pont de commutation (58) avec plusieurs branches de commutation (60), chacune connectée entre les deux bornes d'entrée (54) et comportant plusieurs interrupteurs (38) connectés en série et reliés entre eux un point milieu (62) connecté à une borne de sortie (56) correspondante, chaque module de conversion (35) comprenant en outre un condensateur (64) connecté entre les bornes d'entrée (54), en parallèle du pont de commutation (58).

3. Dispositif (15) selon la revendication 2, dans lequel le premier estimateur (80) est configuré pour calculer, pour chaque module de conversion (35), la valeur estimée $(\widehat{V_{PV_i}}(t_k))$ de la tension continue élémentaire d'entrée ($V_{PVi}$) en fonction de la valeur précédemment mesurée ($V_{PVi}(t_{k-p})$) de la tension continue élémentaire d'entrée ($V_{PVi}$), de la capacité ($C_{PVi}$) du condensateur (64) et d'une valeur du courant ($I_{Ci}$) circulant à travers ledit condensateur (64) ; la valeur du courant ($I_{Ci}$) circulant à travers ledit condensateur (64) étant de préférence obtenue par différence entre une valeur d'un courant élémentaire d'entrée ($I_{PVi}$) reçu par le module de conversion (35) et une valeur d'un courant de pont ($I_{Hi}$) reçu par le pont de commutation (58).

4. Dispositif (15) selon la revendication 3, dans lequel le premier estimateur (80) est configuré pour calculer, pour chaque module de conversion (35), la valeur estimée $(\widehat{V_{PV_i}}(t_k))$ de la tension continue élémentaire d'entrée ($V_{PVi}$) selon l'équation suivante :

$$\widehat{V_{PV_i}}(t_k) = V_{PV_i}(t_{k-1}) + \left(I_{PV_i}(t_k) - I_{H_{i\_M}}(t_k)\right) . \frac{t_k - t_{k-1}}{C_{PV_i}}$$

où $\widehat{V_{PV_i}}(t_k)$ représente la valeur estimée de la tension continue élémentaire d'entrée ($V_{PVi}$),
$V_{PVi}(t_{k-1})$ représente une valeur précédente de la tension continue élémentaire d'entrée ($V_{PVi}$),
$I_{PVi}(t_k)$ représente la valeur du courant élémentaire d'entrée ($I_{PVi}$),
$t_k$, et respectivement $t_{k-1}$, représentent respectivement des instants temporels courant, et respectivement précédent,
$C_{PVi}$ représente la capacité du condensateur (64),
$I_{Hi\_M}(t_k)$ représente la valeur moyenne du courant de pont ($I_{Hi}$) entre les instants temporels $t_{k-1}$ et $t_k$ ;

la valeur précédente $V_{PVi}(t_{k-1})$ de la tension continue élémentaire d'entrée ($V_{PVi}$) étant la valeur précédemment mesurée ($V_{PVi}(t_{k-p})$) de la tension continue élémentaire d'entrée ($V_{PVi}$) si elle a été mesurée pour l'instant temporel précédent, ou bien la précédente valeur estimée $(\widehat{V_{PV_i}}(t_{k-1}))$ de la tension continue élémentaire d'entrée ($V_{PVi}$) si ladite valeur précédemment mesurée ($V_{PVi}(t_{k-p})$) a été mesurée pour un instant temporel ($t_{k-p}$) antérieur à l'instant temporel précédent ($t_{k-1}$) ;

ladite valeur moyenne $I_{H_i\_M}(t_k)$ du courant de pont ($I_{Hi}$) vérifiant de préférence l'équation suivante :

$$I_{H_i\_M}(t_k) = \frac{1}{t_k - t_{k-1}} \int_{t_{k-1}}^{t_k} I_{H_i}(t).\,dt$$

**5.** Dispositif (15) selon l'une quelconque des revendications précédentes, dans lequel le deuxième estimateur (85) est configuré pour calculer la moyenne estimée ($<I_{PVi}>$) du courant élémentaire d'entrée ($I_{PVi}$) reçu par un module de conversion (35) respectif, en l'absence d'une mesure du courant élémentaire d'entrée ($I_{PVi}$) par un capteur de courant pour ledit module de conversion (35).

**6.** Dispositif (15) selon l'une quelconque des revendications précédentes, dans lequel le deuxième estimateur (85) est configuré pour calculer, pour chaque module de conversion (35), la moyenne estimée ($<I_{PVi}>$) du courant élémentaire d'entrée ($I_{PVi}$) sur une durée de moyennement, en fonction de la tension totale de sortie ($V_S$) et d'un courant de sortie ($I_S$) délivrés en sortie du convertisseur d'énergie (10), et d'une valeur moyenne ($<V_{PVi}>$) de la tension continue élémentaire d'entrée ($V_{PVi}$) sur la durée de moyennement ($T_g$) ;
la durée de moyennement ($T_g$) dépendant de préférence d'une demi-période de la tension de sortie ($V_S$).

**7.** Dispositif (15) selon la revendication 6, dans lequel le deuxième estimateur (85) est configuré pour calculer, pour chaque module de conversion (35), la moyenne estimée ($<I_{PVi}>$) du courant élémentaire d'entrée ($I_{PVi}$) selon l'équation suivante :

$$<I_{PV_i}> = \frac{1}{T_g}.\frac{\int_{t_0}^{t_0+T_g} V_S(t).\,I_S(t).\,|K_i(t)|\,dt}{<V_{PV_i}>}$$

où $<I_{PVi}>$ représente la moyenne estimée du courant élémentaire d'entrée ($I_{PVi}$),
$T_g$ représente la durée de moyennement,
$V_S$ représente la tension totale de sortie,
$I_S$ représente le courant de sortie,
$<V_{PVi}>$ représente la valeur moyenne de la tension continue élémentaire d'entrée ($V_{PVi}$) sur ladite durée de moyennement ($T_g$), et
$K_i$ représente un coefficient de connexion, $K_i$ étant égal à 0 lorsqu'aucune source d'énergie (8) n'est connectée en entrée du module de conversion (35) correspondant et différent de 0 lorsqu'au moins une source d'énergie (8) est connectée en entrée dudit module (35) ;
la durée de moyennement ($T_g$) étant de préférence un multiple de la demi-période de la tension de sortie ($V_S$), ledit multiple étant un nombre entier de valeur supérieure ou égale à 1.

**8.** Dispositif (15) selon l'une quelconque des revendications précédentes, prise avec la revendication 2, dans lequel le contrôleur principal (50) comporte en outre un troisième estimateur (90) configuré pour calculer, pour chaque module de conversion (35), une valeur estimée $(\widehat{C_{PV_i}})$ de la capacité ($C_{PVi}$) du condensateur (64).

**9.** Dispositif (15) selon la revendication 8, dans lequel le troisième estimateur (90) est configuré pour estimer une valeur courante de la capacité ($C_{PVi}$) du condensateur (64) en corrigeant une précédente valeur estimée de la capacité ($C_{PVi}$) du condensateur (64) en fonction d'une part du signe de la différence entre une valeur d'un courant de pont ($I_{Hi}$) reçu par le pont de commutation (58) et une valeur d'un courant élémentaire d'entrée ($I_{PVi}$) reçu par le module de conversion (35), dit premier signe, et d'autre part du signe de la différence entre la valeur estimée

$(\widehat{V_{PV_i}}(t_k))$ de la tension continue élémentaire d'entrée ($V_{PVi}$) et la valeur postérieurement mesurée ($V_{PVi}(t_{k+1})$) de la tension continue élémentaire d'entrée ($V_{PVi}$), dit deuxième signe ; une valeur estimée initiale de la capacité ($C_{PVi}$) du condensateur (64) étant prédéfinie ;

si les premier et deuxième signes sont identiques, la valeur courante estimée de la capacité ($C_{PVi}$) du condensateur (64) est de préférence égale à la précédente valeur estimée de la capacité ($C_{PVi}$) du condensateur (64) diminuée d'un pas de correction ($\Delta C_{PVi}$) ;

si les premier et deuxième signes sont distincts, la valeur courante estimée de la capacité ($C_{PVi}$) du condensateur (64) est de préférence égale à la précédente valeur estimée de la capacité ($C_{PVi}$) du condensateur (64) augmentée du pas de correction ($\Delta C_{PVi}$) ;

le pas de correction ($\Delta C_{PVi}$) étant de préférence de l'ordre du pourcent de la valeur initiale de la capacité ($C_{PVi}$) du condensateur (64).

**10.** Dispositif (15) selon l'une quelconque des revendications précédentes, dans lequel chaque source d'énergie (8) comporte au moins un élément choisi parmi : un bloc photovoltaïque (20), une batterie électrique et un supercondensateur.

**11.** Dispositif (15) selon la revendication 10, dans lequel chaque source d'énergie (8) comporte P paire(s) de blocs photovoltaïques (20), les blocs photovoltaïques (20) d'une paire respective étant connectés en cascade, P étant un nombre entier supérieur ou égal à 1 ;

si P est strictement supérieur à 1, les paires de blocs photovoltaïques (20) étant de préférence connectées en cascade.

**12.** Dispositif (15) selon les revendications 2, 7 et 10, dans lequel chaque module de conversion (35) comprend Q condensateurs, où Q, égal au double du nombre P, représente le nombre de blocs photovoltaïques (20) pour la source d'énergie (8) associée au module de conversion (35), chaque condensateur (64) étant apte à être connecté en parallèle d'un bloc photovoltaïque (20) respectif, les Q condensateurs (64) ayant une capacité sensiblement identique, et

dans lequel lorsque le coefficient de connexion ($K_i$) est non nul, sa valeur est un multiple de 1/Q, le multiple étant un entier relatif dont la valeur dépend d'une configuration de connexion des blocs photovoltaïques (20) et d'un état de connexion de chacun des blocs photovoltaïques (20), chaque état de connexion étant parmi connecté et déconnecté.

**13.** Système électronique de conversion d'énergie électrique (5) apte à convertir une pluralité de tensions continues d'entrée ($V_{PV1}$, $V_{PV2}$, ..., $V_{PVN}$) en une tension totale de sortie ($V_S$) et/ou un courant de sortie ($I_G$), le système de conversion (5) comprenant :

- un convertisseur d'énergie (10) apte à délivrer la tension totale de sortie ($V_S$) et/ou le courant de sortie ($I_G$) à partir de la pluralité de tensions continues d'entrée ($V_{PV1}$, $V_{PV2}$, ... , $V_{PVN}$), dites tensions continues élémentaires d'entrée ($V_{PV1}$, $V_{PV2}$, ..., $V_{PVN}$), chacune étant issue d'une source d'énergie (8) respective ; le convertisseur d'énergie (10) comprenant plusieurs modules de conversion d'énergie (35), chacun étant apte à recevoir en entrée une tension continue élémentaire d'entrée ($V_{PVi}$) de la part d'une source d'énergie (8) respective et à délivrer en sortie une tension élémentaire de sortie ($V_{Hi}$) ; les modules de conversion (35) étant connectés en série par leurs sorties et la tension totale de sortie ($V_S$) étant égale à la somme des tensions élémentaires de sortie ($V_{PV1}$, $V_{PV2}$, ..., $V_{PVN}$) ; chaque module de conversion (35) comportant plusieurs interrupteurs (38) pour convertir la tension continue élémentaire d'entrée ($V_{PVi}$) respective en la tension élémentaire de sortie ($V_{Hi}$) respective,

- un dispositif électronique (15) de pilotage du convertisseur d'énergie électrique (10),

**caractérisé en ce que** le dispositif électronique de pilotage (15) est selon l'une quelconque des revendications précédentes.

**14.** Procédé de pilotage d'un convertisseur d'énergie électrique (10), le convertisseur d'énergie (10) étant apte à délivrer une tension totale de sortie ($V_S$) et/ou un courant de sortie ($I_G$) à partir de la pluralité de tensions continues d'entrée ($V_{PV1}$, $V_{PV2}$, ..., $V_{PVN}$), dites tensions continues élémentaires d'entrée ($V_{PV1}$, $V_{PV2}$, ..., $V_{PVN}$), chacune étant issue d'une source d'énergie (8) respective ; le convertisseur d'énergie (10) comprenant plusieurs modules de conversion d'énergie (35), chacun étant apte à recevoir en entrée une tension continue élémentaire d'entrée ($V_{PVi}$) de la part d'une source d'énergie (8) respective et à délivrer en sortie une tension élémentaire de sortie ($V_{Hi}$) ; les modules de conversion (35) étant connectés en série par leurs sorties et la tension totale de sortie ($V_S$) étant égale à la somme des tensions élémentaires de sortie ($V_{PV1}$, $V_{PV2}$, ... , $V_{PVN}$) ; chaque module de conversion (35) comportant plusieurs interrupteurs (38) pour convertir la tension continue élémentaire d'entrée ($V_{PVi}$) respective en la tension élémentaire de sortie ($V_{Hi}$) respective,

le procédé de pilotage étant mis en oeuvre par un contrôleur principal (50) connecté à chacun de plusieurs contrôleurs élémentaires (40), chaque contrôleur élémentaire (40) étant associé à un module de conversion (35) respectif et configuré pour commander les interrupteurs (38) dudit module de conversion (35), le procédé comprenant :

- effectuer une régulation d'une grandeur de sortie ($V_S$ ; $I_S$) du convertisseur d'énergie (10) en envoyant des ordres de commande aux contrôleurs élémentaires (40), la régulation étant effectuée en fonction d'ensembles de grandeur(s) élémentaire(s), chaque ensemble de grandeur(s) élémentaire(s) étant associé à un module de conversion (35) respectif, chaque contrôleur élémentaire (40) mesurant régulièrement des valeurs de l'ensemble de grandeur(s) élémentaire(s) pour le module de conversion (35) respectif auquel il est associé, puis les transmettant au contrôleur principal (50), l'ensemble de grandeur(s) élémentaire(s) comportant la tension continue élémentaire d'entrée ($V_{PVi}$),

**caractérisé en ce qu'**il comprend en outre :

- calculer, pour chaque module de conversion (35), une valeur estimée $(\widehat{V_{PV_i}}(t_k))$ de la tension continue élémentaire d'entrée ($V_{PVi}$) à partir d'une valeur précédemment mesurée ($V_{PVi}(t_{k-p})$) de la tension continue élémentaire d'entrée ($V_{PVi}$), et

- calculer, pour chaque module de conversion (35), une moyenne estimée ($<I_{PVi}>$) du courant élémentaire d'entrée ($I_{PVi}$) reçu par le module de conversion (35), la moyenne estimée ($<I_{PVi}>$) du courant élémentaire d'entrée ($I_{PVi}$) étant alors utilisée pour calculer la valeur estimée $(\widehat{V_{PV_i}}(t_k))$ de la tension continue élémentaire d'entrée ($V_{PVi}$).

15. Programme d'ordinateur comportant des instructions logicielles qui, lorsqu'elles sont exécutées par un ordinateur, mettent en oeuvre un procédé selon la revendication précédente.

<u>FIG.1</u>

**FIG.2**

FIG.3

## FIG.4

150

Estimation de la tension continue élémentaire d'entrée, pour chaque module de conversion

160

Régulation de la grandeur de sortie du convertisseur d'énergie

FIG.5

FIG.6

## FIG.7

## FIG.8

$$\underline{\text{FIG.9}}$$

FIG.10

FIG.11

FIG.12

EP 4 383 551 A1

Europäisches Patentamt
European Patent Office
Office européen des brevets

**RAPPORT DE RECHERCHE EUROPEENNE**

Numéro de la demande

EP 23 21 4212

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | PATRICIO CORTES ET AL: "Predictive control of a single-phase cascaded h-bridge photovoltaic energy conversion system", POWER ELECTRONICS AND MOTION CONTROL CONFERENCE (IPEMC), 2012 7TH INTERNATIONAL, IEEE, 2 juin 2012 (2012-06-02), pages 1423-1428, XP032215883, DOI: 10.1109/IPEMC.2012.6259023 ISBN: 978-1-4577-2085-7 | 1-7, 10-15 | INV. H02M7/5387 H02M1/00 G05F1/67 H02S40/32 |
| Y | * Sous-section III. B Predictive grid current control; Section IV. RESULTS; équation 7.; figures 1,2 * ----- | 8,9 | |
| X | SAJADIAN SALLY ET AL: "Distributed Maximum Power Point Tracking Using Model Predictive Control for Photovoltaic Energy Harvesting Architectures Based on Cascaded Power Optimizers", IEEE JOURNAL OF PHOTOVOLTAICS, IEEE, vol. 7, no. 3, 1 mai 2017 (2017-05-01), pages 849-857, XP011646673, ISSN: 2156-3381, DOI: 10.1109/JPHOTOV.2017.2680601 [extrait le 2017-04-19] | 1,14,15 | |
| | | | DOMAINES TECHNIQUES RECHERCHES (IPC) |
| A | * Section II. PREDICTIVE MODEL OF THE CASCADED DC/DC PHOTOVOLTAIC ENERGY HARVESTING ARCHITECTURE; équation 9:; figures 1c,2,3 * ----- -/-- | 2-13 | H02M H02J G05F H02S |

Le présent rapport a été établi pour toutes les revendications

| Lieu de la recherche | Date d'achèvement de la recherche | Examinateur |
|---|---|---|
| La Haye | 12 avril 2024 | Kanelis, Konstantin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 4

42

Europäisches
Patentamt

European
Patent Office

Office européen
des brevets

**RAPPORT DE RECHERCHE EUROPEENNE**

Numéro de la demande

**EP 23 21 4212**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | AGARWAL NIKUNJ ET AL: "Condition monitoring of dc-link capacitor utilizing zero state of solar PV H5 inverter", 2016 10TH INTERNATIONAL CONFERENCE ON COMPATIBILITY, POWER ELECTRONICS AND POWER ENGINEERING (CPE-POWERENG), IEEE, 29 juin 2016 (2016-06-29), pages 174-179, XP032946637, DOI: 10.1109/CPE.2016.7544180 * équation 4.; figure 3 * ----- | 8,9 | |
| Y | AGARWAL NIKUNJ ET AL: "Quasi-Online Technique for Health Monitoring of Capacitor in Single-Phase Solar Inverter", IEEE TRANSACTIONS ON POWER ELECTRONICS, INSTITUTE OF ELECTRICAL AND ELECTRONICS ENGINEERS, USA, vol. 33, no. 6, 1 juin 2018 (2018-06-01), pages 5283-5291, XP011678254, ISSN: 0885-8993, DOI: 10.1109/TPEL.2017.2736162 [extrait le 2018-02-21] * équations 12, 13.; figure 3 * ----- | 8,9 | DOMAINES TECHNIQUES RECHERCHES (IPC) |
| A | LI PO ET AL: "Intermediate Voltage Regulation for Total Harmonic Distortion Reduction of Two-Stage Inverters Under Model Predictive Control Scheme via Observers", IEEE ACCESS, vol. 7, 25 avril 2019 (2019-04-25), - 25 avril 2019 (2019-04-25), pages 51940-51951, XP011721782, DOI: 10.1109/ACCESS.2019.2912160 * équation 2.; figure 2 * ----- -/-- | 1-15 | |

Le présent rapport a été établi pour toutes les revendications

| Lieu de la recherche | Date d'achèvement de la recherche | Examinateur |
|---|---|---|
| La Haye | 12 avril 2024 | Kanelis, Konstantin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................

& : membre de la même famille, document correspondant

EPO FORM 1503 03.82 (P04C02)

page 2 de 4

Europäisches
Patentamt

European
Patent Office

Office européen
des brevets

## RAPPORT DE RECHERCHE EUROPEENNE

Numéro de la demande

**EP 23 21 4212**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LIU CHANG ET AL: "Leakage Current Suppression of Transformerless 5L-ANPC Inverter With Lower Ripple Model Predictive Control", IEEE TRANSACTIONS ON INDUSTRY APPLICATIONS, IEEE SERVICE CENTER, PISCATAWAY, NJ, US, vol. 58, no. 5, 27 mai 2022 (2022-05-27), pages 6297-6309, XP011920419, ISSN: 0093-9994, DOI: 10.1109/TIA.2022.3178818 [extrait le 2022-05-30] * équation 10.; figure 1 * | 1-15 | |
| | ----- | | |
| A | HARBI IBRAHIM ET AL: "Low-Complexity Finite Set Model Predictive Control for Split-Capacitor ANPC Inverter With Different Levels Modes and Online Model Update", IEEE JOURNAL OF EMERGING AND SELECTED TOPICS IN POWER ELECTRONICS, IEEE, PISCATAWAY, NJ, USA, vol. 11, no. 1, 26 août 2022 (2022-08-26), pages 506-522, XP011933545, ISSN: 2168-6777, DOI: 10.1109/JESTPE.2022.3202238 [extrait le 2022-08-26] * équation 19.; figure 1 * | 1-15 | DOMAINES TECHNIQUES RECHERCHES (IPC) |
| | ----- | | |
| | -/-- | | |

Le présent rapport a été établi pour toutes les revendications

| Lieu de la recherche | Date d'achèvement de la recherche | Examinateur |
|---|---|---|
| La Haye | 12 avril 2024 | Kanelis, Konstantin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**page 3 de 4**

Europäisches
Patentamt

European
Patent Office

Office européen
des brevets

# RAPPORT DE RECHERCHE EUROPEENNE

Numéro de la demande

EP 23 21 4212

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PRABAHARAN N ET AL: "Analysis and integration of multilevel inverter configuration with boost converters in a photovoltaic system", ENERGY CONVERSION AND MANAGEMENT, ELSEVIER SCIENCE PUBLISHERS, OXFORD, GB, vol. 128, 4 octobre 2016 (2016-10-04), pages 327-342, XP029803736, ISSN: 0196-8904, DOI: 10.1016/J.ENCONMAN.2016.09.088 * abrégé; figure 6 * ----- | 1-15 | |

| | | | DOMAINES TECHNIQUES RECHERCHES (IPC) |
|---|---|---|---|

Le présent rapport a été établi pour toutes les revendications

| Lieu de la recherche | Date d'achèvement de la recherche | Examinateur |
|---|---|---|
| La Haye | 12 avril 2024 | Kanelis, Konstantin |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

page 4 de 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. PAN et al.** *A Decentralized Control Method for Series Connected PV Battery Hybrid Microgrid,* 2017
- **J. HE et al.** *Hybrid Microgrid With Parallel- and Series-Connected Microconverters,* 2018
- **X. ZHANG et al.** *A Grid-Supporting Strategy for Cascaded H-Bridge PV Converter Using VSG Algorithm With Modular Active Power Reserve,* 2021